# FASCICULE DE BREVET EUROPEEN

(11) **EP 3 419 817 B1**
(45) Date de publication et mention de la délivrance du brevet: **08.07.2020**
(21) Numéro de dépôt: 17710329.8
(22) Date de dépôt: 17.02.2017
(51) Int. Cl.: B29D 11/00, B29C 65/00, B32B 37/00

(54) **MACHINE DE REPORT D'UN FILM FONCTIONNEL PRÉFORMÉ SUR UN SUBSTRAT OPHTALMIQUE ET PROCÉDÉ DE FABRICATION D'UNE LENTILLE OPHTALMIQUE COMPORTANT UN PROCÉDÉ DE REPORT DU FILM PRÉFORMÉ SUR LE SUBSTRAT**
MASCHINE ZUR ÜBERTRAGUNG EINES VORGEFORMTEN FUNKTIONELLEN FILMS AUF EIN OPHTHALMISCHES SUBSTRAT UND VERFAHREN ZUR HERSTELLUNG EINES BRILLENGLASES MIT EINEM VERFAHREN ZUR ÜBERTRAGUNG DES VORGEFORMTEN FILMS AUF DAS SUBSTRAT
MACHINE FOR TRANSFERRING A PREFORMED FUNCTIONAL FILM ONTO AN OPHTHALMIC SUBSTRATE AND METHOD FOR PRODUCING AN OPHTHALMIC LENS COMPRISING A METHOD FOR TRANSFERRING THE PREFORMED FILM ONTO THE SUBSTRATE

(30) Priorité: 22.02.2016 FR 1651441
(43) Date de publication de la demande: 02.01.2019
(73) Titulaire: Essilor International, 94220 Charenton-Le-Pont (FR)
(72) Inventeur: MATZ, Michel, 94227 Charenton-Le-Pont Cedex (FR); GENTILS, Hervé, 94227 Charenton-Le-Pont Cedex (FR); TRIDON, Jean-Marc, 94227 Charenton-Le-Pont Cedex (FR)
(74) Mandataire: Santarelli
(86) Numéro de dépôt international: PCT/FR2017/050369
(87) Numéro de publication internationale: WO 2017/144802

(56) Documents cités:
- US-A- 3 322 598
- US-A- 4 707 208
- US-A1- 2010 193 112
- US-A1- 2012 013 979

## Description

### DOMAINE DE L'INVENTION

L'invention a trait à la fabrication des lentilles ophtalmiques qui comportent un substrat et un film fonctionnel préformé assujetti à une face courbe dudit substrat.

L'invention vise en particulier les machines de report d'un tel film fonctionnel préformé sur un tel substrat, et les procédés de fabrication de telles lentilles, comportant un procédé de report mis en œuvre à l'aide d'une telle machine.

### ARRIERE PLAN TECHNOLOGIQUE

On sait que les films fonctionnels utiles aux lentilles ophtalmiques sont parfois plans à l'état initial, pour des raisons de commodité de fabrication de ces films ; et on connaît déjà des procédés de report d'un film fonctionnel initialement plan sur une face courbe d'un substrat.

Dans ces procédés, pour éviter que des défauts apparaissent dans le film, on préforme le film en lui conférant une courbure initiale appropriée à froid ou de préférence à chaud (thermoformage), puis on l'applique sur le substrat.

En particulier, la demande de brevet français 2 883 984, à laquelle correspond la demande de brevet américain US 2008/0314499, propose de positionner le substrat ayant une face courbe sur un porte-substrat à l'intérieur d'une enceinte, de positionner le film fonctionnel plan dans un porte-film à l'extrémité supérieure de l'enceinte pour fermer cette enceinte, de positionner l'enceinte à la verticale d'un tampon flexible avec alignement de leurs centres géométriques respectifs, puis de préformer le film fonctionnel en appliquant le tampon flexible sur le film ; le film étant ainsi thermoformé.

Au surplus, il est ensuite proposé de mettre en dépression l'enceinte entraînant la mise en contact du substrat et du film fonctionnel thermoformé par leurs centres géométriques respectifs du côté de la face courbe du substrat, et de translater verticalement le tampon flexible entraînant l'établissement d'un contact conformal entre le film fonctionnel et le substrat du côté de sa face courbe.

La demande de brevet français 2 918 917, à laquelle correspond la demande de brevet américain US 2010/0193112, propose quant à elle de mettre en œuvre un procédé de report semblable, mais dans lequel l'immobilisation directe du film par le porte-film suivant un contour annulaire est remplacée par l'immobilisation d'une membrane auxiliaire déformable initialement plane sur une face de laquelle le film fonctionnel est retenu par une couche de liaison configurée pour que le film fonctionnel ait une forme qui varie conformément à la déformation de la membrane, le film fonctionnel restant alors parallèle à la membrane auxiliaire, seule la membrane auxiliaire étant maintenue par le porte-film à son pourtour, le film fonctionnel n'étant maintenu en contact avec la membrane auxiliaire que par la couche de liaison.

La mise en œuvre du procédé de report décrit par la demande de brevet français 2 918 917 s'effectue :
- comme dans la demande de brevet français 2 883 984, c'est-à-dire qu'on utilise un tampon flexible pour opérer le préformage du film fonctionnel qui lui donne une courbure dont la convexité est tournée vers la face courbe du substrat, on met en contact le centre de la face convexe du film fonctionnel avec le centre de la face courbe convexe du substrat, et on applique ensuite le film fonctionnel avec le tampon flexible en inversant sa courbure afin de diffuser radialement à partir du centre du film fonctionnel jusqu'à sa périphérie le contact conformal entre le film fonctionnel et le substrat ; ou
- en variante, on n'utilise pas de tampon flexible et la dépression dans l'enceinte est remplacée par une surpression pour opérer le préformage du film fonctionnel qui lui donne donc une courbure dont la concavité est tournée vers la face courbe du substrat, on met en contact le centre de la face concave du film fonctionnel avec le centre de la face courbe convexe du substrat et on applique ensuite le film, sans inverser sa courbure, en entrainant le substrat vers le film, afin de diffuser radialement à partir du centre du film jusqu'à sa périphérie le contact conformal entre le film fonctionnel et le substrat.

Dans le procédé de report décrit par la demande de brevet français 2 918 917, le film fonctionnel n'étant nullement maintenu à sa périphérie par des moyens mécaniques, il peut glisser sur la membrane pendant que la déformation est générée, réduisant alors les déformations qui sont créées dans le film fonctionnel.

Un exemple de dispositif et de procédé pour joindre des éléments ophtalmiques selon les préambules des revendications 1 et 7 peut être vu dans le document US 3 322 598 A.

### OBJET DE L'INVENTION

L'invention vise à permettre la fabrication d'une lentille ophtalmique mettant en œuvre un tel report dans le cas où le film fonctionnel est préalablement préformé.

L'invention propose à cet effet, sous un premier aspect, une machine de report d'un film fonctionnel préformé sur une face courbe d'un substrat ophtalmique, comportant :
- un premier dispositif de réception configuré pour recevoir et maintenir ledit substrat dans une première position prédéterminée ;
- un deuxième dispositif de réception, distinct dudit premier dispositif de réception, et configuré pour recevoir ledit film fonctionnel préformé dans une deuxième position prédéterminée ; avec ledit premier dispositif de réception et/ou ledit deuxième dispositif de réception qui sont en outre configurés pour maintenir ledit film fonctionnel préformé dans sa deuxième position prédéterminée et pour appliquer une force de pression prédéterminée, par exemple sensiblement équi-répartie, sur tout un pourtour dudit film fonctionnel ;
- un premier mécanisme de mise en mouvement d'au moins un desdits premier et deuxième dispositifs de réception, configuré pour placer ladite face courbe dudit substrat ophtalmique en regard dudit film fonctionnel préformé, avec les centres géométriques respectifs dudit substrat ophtalmique et dudit film fonctionnel préformé qui sont alignés ;
ladite machine étant caractérisée en ce qu'elle comporte en outre :
- un deuxième mécanisme de mise en mouvement d'au moins un desdits premier et deuxième dispositifs de réception, configuré pour mettre en contact le centre dudit film fonctionnel préformé avec le centre de ladite face courbe dudit substrat et ensuite pour appliquer ledit film fonctionnel sur ledit substrat ophtalmique afin de diffuser radialement à partir du centre dudit film fonctionnel jusqu'à sa périphérie un contact conformal entre ledit film fonctionnel et ladite face courbe dudit substrat ; et
- une unité de contrôle et de commande configurée pour contrôler au moins ledit deuxième mécanisme de mise en mouvement lorsque ledit film fonctionnel et ledit substrat ophtalmique sont en contact.

Grâce aux deux dispositifs distincts de réception, la position du substrat et la position du film dans ces derniers sont assurées de manière simple, commode et sûre. Le substrat et le film sont d'ailleurs positionnés sur les dispositifs de réception respectifs de manière indépendante l'un de l'autre. Le premier mécanisme de mise en mouvement permet quant à lui d'assurer le centrage des positions du film et du substrat l'une par rapport à l'autre, en alignant leur centres géométriques.

La répartition régulière et homogène des forces appliquées sur le pourtour du film préformé, seul, c'est-à-dire sans membrane associée, assure une répartition régulière et homogène (isotrope) des contraintes qui s'appliquent sur l'ensemble de la surface du film maintenu pendant l'application du film sur le substrat.

On notera que la valeur des forces appliquées sur le pourtour du film préformé peut être par exemple de l'ordre d'environ 5 bars.

Au surplus, le déplacement contrôlé des deux dispositifs distincts de réception l'un par rapport à l'autre pour mettre en contact et appliquer le film sur le substrat permet une lamination progressive et contrôlée du film et du substrat, qui limite la génération de contraintes hétérogènes (anisotrope) sur le film.

La machine selon l'invention permet donc d'effectuer un report du film préformé sur le substrat de manière particulièrement simple, commode et efficace.

On notera que le film fonctionnel peut être configuré pour offrir une fonction anti-choc, une fonction anti-rayures, une fonction de réflexion telle que anti-reflet ou miroir, une fonction polarisante, une fonction de filtration permettant de moduler la courbe de transmission, cette filtration étant sélective ou non sélective, une fonction photochromique, une fonction électrochromique, une fonction anti-statique, une fonction anti-salissure, une fonction anti-buée voire anti-pluie, une fonction de collage ou la combinaison d'une ou plusieurs de ces fonctions.

On notera également que le substrat ophtalmique peut être un substrat dit fini, c'est-à-dire qui présente deux faces opposées qui comportent des caractéristiques ophtalmiques dites de prescription, ou un substrat dit semi-fini, c'est-à-dire qui présente deux faces opposées, l'une des deux seulement comportant des caractéristiques ophtalmiques dites de prescription tandis que l'autre en est dépourvue (il peut s'agir d'une face dite brute).

Alternativement, le substrat peut être le support d'une lentille ophtalmique sans prescription, généralement défini comme un verre piano utilisé par exemple pour former des verres solaires non correcteurs. Le cas échéant, le substrat peut présenter intrinsèquement une fonction prédéterminée, par exemple une fonction de filtration.

On notera en outre que la face courbe du substrat sur laquelle le film préformé est appliqué peut être concave ou convexe.

L'ensemble comportant le substrat et le film appliqué sur ce substrat forme par conséquent un assemblage formant une lentille ophtalmique (correctrice ou non correctrice).

Le report du film est ici indiqué comme étant réalisé directement sur la face courbe du substrat. Dans le cadre de l'invention, il faut comprendre que la face courbe du substrat est soit nue, soit elle peut déjà comporter un film initial ou un revêtement initial, voire plusieurs ; de sorte que le film qui est reporté peut être mis en contact avec un film/revêtement initial sur le substrat.

Un tel film/revêtement initial est disposé sur au moins une des faces du substrat et est configuré pour lui conférer au moins une fonction choisie par exemple parmi celles susmentionnées au sujet du film fonctionnel préformé qui est reporté.

La machine de report selon l'invention est particulièrement intéressante lorsque la lentille ophtalmique ainsi formée doit subir, postérieurement au report, un traitement thermique. En effet, au cours d'un traitement thermique d'un tel assemblage formant une lentille, la température du substrat augmente et, lorsque sa température devient proche d'une température de transition vitreuse du matériau dans lequel est réalisé le substrat, ce dernier se ramollit jusqu'à ne plus ou presque plus opposer de résistance à toutes contraintes résiduelles présentes dans l'assemblage formé (film/substrat). La mollesse du substrat fait que les contraintes résiduelles présentes dans l'assemblage peuvent subir une relaxation et ainsi conduire à une légère déformation du substrat, par exemple un léger vrillage. Une telle déformation peut induire un léger défaut optique, voire un léger changement de la fonction optique de la lentille. Or, comme indiqué plus haut, la machine selon l'invention permet de limiter la formation de telles contraintes, en particulier grâce aux positionnements et à l'alignement précis du film et du substrat et aussi grâce au déplacement contrôlé lors de l'application du film.

Selon certaines caractéristiques avantageuses de la machine de report, ledit deuxième dispositif de réception et ledit film fonctionnel préformé maintenu dans sa deuxième position prédéterminée délimitent une première enceinte fermée et étanche, et ladite machine comporte en outre un système configuré pour générer une différence positive de pression au sein de ladite première enceinte par rapport à son environnement immédiat, de sorte à mettre en tension ledit film fonctionnel préformé.

L'augmentation de pression ainsi générée dans la première enceinte et la tension du film en résultant permettent d'appliquer une pression identique sur toute la surface du film et ainsi d'uniformiser la répartition des contraintes sur cette surface ; en vue de limiter les problèmes optiques liés aux phénomènes de distorsion, notamment induits lors de la relaxation des contraintes résiduelles au cours ou suite à un post-traitement thermique de la lentille.

Cette augmentation de pression peut être considérée comme une mise en surpression au moins relative par rapport à l'extérieur de la première enceinte, ou comme une mise en dépression de l'environnement immédiat de la première enceinte, par rapport à cette dernière.

La différence positive de pression (ou surpression) au sein de ladite première enceinte par rapport à son environnement immédiat est par exemple comprise entre 0,1 et 1 bar, préférentiellement comprise entre 0,1 et 0,5 bar, et encore préférentiellement égale à environ 0,25 bar.

Au surplus, ce différentiel positif de pression entre l'intérieur de la première enceinte et son environnement immédiat peut par exemple être généré avant la mise en contact du film et du substrat.

Un tel différentiel positif de pression peut également être conservé jusqu'à la fin du procédé de report ou être supprimé juste après l'application du film sur le substrat, en vidangeant la première enceinte fermée et étanche.

Ledit deuxième dispositif de réception peut présenter une base horizontale sur laquelle repose le film fonctionnel par son pourtour et un mécanisme de serrage configuré pour appliquer verticalement et uniformément ladite force de pression prédéterminée sur ledit pourtour dudit film fonctionnel.

Ledit mécanisme de serrage peut être formé par une pluralité de bras articulés présentant chacun une pince d'extrémité configurée pour venir enserrer ledit pourtour dudit film fonctionnel sur ladite base ; ou par un organe au moins partiellement annulaire configuré pour être monté en appui serré sur ladite base.

Selon d'autres caractéristiques de la machine de report, lesdits premier et deuxième dispositifs de réception sont configurés pour maintenir dans sa deuxième position prédéterminée ledit film fonctionnel préformé et pour définir, lorsque ledit film fonctionnel préformé est en regard de ladite face courbe dudit substrat, une deuxième enceinte fermée et étanche, ladite deuxième enceinte étant délimitée notamment par ladite face courbe dudit substrat et une face dudit film fonctionnel préformé qui est tournée vers ladite face courbe dudit substrat, et ladite machine comporte en outre un système configuré pour générer une différence négative de pression au sein de ladite deuxième enceinte par rapport à ladite première enceinte.

Cela permet notamment de favoriser l'établissement du contact conformal entre ledit film fonctionnel et ladite face courbe dudit substrat lors de l'application du film fonctionnel préformé avec le substrat ophtalmique, tout en minimisant les contraintes de tension du film.

On notera que la diminution de pression dans la deuxième enceinte peut être considérée comme une mise en dépression par rapport à la première enceinte fermée et étanche ; et que la surpression mentionnée ci-dessus peut le cas échéant être relative par rapport à la pression dans la deuxième enceinte fermée et étanche, cette dernière formant par conséquent l'environnement immédiat de la première enceinte.

La différence négative de pression au sein de ladite deuxième enceinte par rapport à ladite première enceinte est par exemple comprise entre 0,1 et 1 bar, préférentiellement comprise entre 0,1 et 0,5 bar, et encore préférentiellement égale à 0,25 bar.

Au surplus, on notera que la dépression dans la deuxième enceinte peut être générée du fait de la surpression générée dans la première enceinte ou, au contraire, la surpression dans la première enceinte peut être générée par la dépression générée dans la deuxième enceinte.

Selon d'autres caractéristiques de la machine de report, ledit deuxième mécanisme de mise en mouvement est configuré pour appliquer ledit film fonctionnel avec ledit substrat ophtalmique en inversant la courbure dudit film fonctionnel afin de diffuser radialement à partir du centre dudit film fonctionnel jusqu'à sa périphérie le contact conformal entre ledit film fonctionnel et ladite face courbe dudit substrat.

On notera que l'inversion de courbure (aussi dit retournement de forme) du film préformé peut se produire lorsqu'il présente une face convexe qui est mise au contact d'une face également convexe du substrat. Le cas échéant, le maintien du film directement par son pourtour et le contrôle du déplacement des deux dispositifs de réception, lors de l'application du film sur le substrat, permet d'éviter que le changement (inversion) de courbure ne se produise trop brutalement (ou rapidement), et permet ainsi d'éviter un phénomène dit de claquage du film sur le substrat. On notera que ce phénomène de claquage est particulièrement limité dans la machine selon l'invention une fois que la majeure partie de la surface du film en contact avec le substrat s'est au moins partiellement conformée avec la surface de ce dernier.

Selon encore d'autres caractéristiques préférées, simples, commodes et économiques de la machine selon l'invention :
- lesdits premier et deuxième dispositifs de réception sont configurés pour que ladite face courbe dudit substrat et une face dudit film fonctionnel prévue pour être appliquée sur ladite face courbe dudit substrat soient tournées dans une même direction axiale lorsque ledit substrat et ledit film fonctionnel sont respectivement dans les première et deuxième positions prédéterminées, avant leur mise en regard, et ledit premier mécanisme de mise en mouvement est configuré pour retourner au moins un desdits premier et deuxième dispositifs de réception pour le positionner en regard de l'autre desdits premier et deuxième dispositifs de réception et ainsi placer ladite face courbe dudit substrat ophtalmique en regard de ladite face dudit film fonctionnel préformé prévue pour être appliquée sur ladite face courbe dudit substrat ;
- au moins un desdits premier et deuxième dispositifs de réception comporte un mécanisme de centrage automatique du substrat et/ou du film fonctionnel respectivement dans la première et/ou dans la deuxième position prédéterminée ;
- ledit premier dispositif de réception comporte une contre-forme sur laquelle repose le substrat ;
- ledit substrat présente, sur sa face courbe, une couche initiale formée d'un matériau présentant des propriétés adhésives ;
- ladite unité de contrôle et de commande et ledit deuxième mécanisme de mise en mouvement sont configurés pour appliquer ledit film fonctionnel avec ledit substrat ophtalmique sous une vitesse constante prédéterminée de rapprochement des premier et deuxième dispositifs de réception l'un par rapport à l'autre, notamment de l'ordre par exemple de 0,05 à 20 millimètres/seconde, préférentiellement de l'ordre de 0,3 à 0,5 millimètre/seconde ; et/ou
- ladite unité de contrôle et de commande et ledit deuxième mécanisme sont configurés pour appliquer dans ladite première enceinte une pression par exemple comprise entre 0 et 5 bars, préférentiellement comprise entre 1,5 et 3,5 bars, pendant une durée par exemple comprise entre 30 secondes et 10 minutes; dans le but de maintenir plaqué le film sur le substrat après lamination et aussi pour amorcer le procédé intrinsèque de collage entre ces éléments.

L'invention propose également, sous un second aspect, un procédé de fabrication d'une lentille ophtalmique comportant un substrat et un film fonctionnel préformé et assujetti à une face courbe dudit substrat, ledit procédé de fabrication comportant un procédé de report dudit film fonctionnel préformé qui est mis en œuvre à l'aide d'une machine de report telle que celle décrite ci-dessus ; ledit procédé de report comportant les étapes suivantes :
- monter et maintenir ledit substrat dans une première position prédéterminée sur un premier dispositif de réception de ladite machine ;
- monter ledit film fonctionnel préformé dans une deuxième position prédéterminée sur un deuxième dispositif de réception de ladite machine et le maintenir en appliquant une force de pression prédéterminée, et par exemple sensiblement équi-répartie, sur tout un pourtour dudit film fonctionnel grâce audit premier dispositif de réception et/ou audit deuxième dispositif de réception ;
- positionner la face courbe dudit substrat en regard dudit film fonctionnel préformé avec un premier mécanisme de mise en mouvement d'au moins un desdits premier et deuxième dispositifs de réception de ladite machine, avec les centres géométriques respectifs du substrat et dudit film fonctionnel préformé qui sont alignés ;
ledit procédé étant caractérisé en ce qu'il comporte en outre les étapes suivantes :
- mettre en contact le centre dudit film fonctionnel préformé avec le centre de ladite face courbe dudit substrat ; et
- appliquer ledit film fonctionnel avec ledit substrat ophtalmique afin de diffuser radialement à partir du centre dudit film fonctionnel jusqu'à sa périphérie un contact conformal entre ledit film fonctionnel et ladite face courbe dudit substrat, avec un deuxième mécanisme de mise en mouvement d'au moins un desdits premier et deuxième dispositifs de réception de ladite machine ; ladite mise en contact et ladite application étant contrôlée par une unité de contrôle et de commande de ladite machine.

Selon des caractéristiques préférées, simples, commodes et économiques du procédé selon l'invention :
- ledit deuxième dispositif de réception et ledit film fonctionnel préformé maintenu dans sa deuxième position prédéterminée délimitent une première enceinte fermée et étanche, et ledit procédé de report comporte une étape de génération d'une différence positive de pression au sein de ladite première enceinte par rapport à son environnement immédiat de sorte à mettre en tension ledit film fonctionnel préformé ;
- la différence positive de pression au sein de ladite première enceinte par rapport à son environnement immédiat est par exemple comprise entre 0,1 et 1 bar, préférentiellement comprise entre 0,1 et 0,5 bar, et encore préférentiellement égale à environ 0,25 bar ;
- ledit deuxième dispositif de réception présente une base horizontale sur laquelle repose ledit film fonctionnel par son pourtour, et l'étape de maintenir ledit film fonctionnel dans sa deuxième position prédéterminée est réalisée en appliquant verticalement ladite force de pression prédéterminée sur ledit pourtour dudit film fonctionnel avec un mécanisme de serrage dudit deuxième dispositif de réception ;
- lesdits premier et deuxième dispositifs de réception sont configurés pour maintenir dans sa deuxième position prédéterminée ledit film fonctionnel préformé et pour définir, lorsque ledit film fonctionnel préformé est en regard de ladite face courbe dudit substrat, une deuxième enceinte fermée et étanche délimitée notamment par ladite face courbe dudit substrat et une face dudit film fonctionnel préformé qui est tournée vers ladite face courbe dudit substrat, et ledit procédé de report comporte une étape de génération d'une différence négative de pression au sein de ladite deuxième enceinte par rapport à ladite première enceinte ;
- la différence négative de pression au sein de ladite deuxième enceinte par rapport à ladite première enceinte est par exemple comprise entre 0,1 et 1 bar, préférentiellement comprise entre 0,1 et 0,5 bar, et encore préférentiellement égale à environ 0,25 bar ;
- l'étape d'appliquer ledit film sur ledit substrat est réalisée en inversant la courbure dudit film fonctionnel afin de diffuser radialement à partir du centre dudit film fonctionnel jusqu'à sa périphérie le contact conformal entre ledit film fonctionnel et ladite face courbe dudit substrat ;
- les étapes de monter ledit substrat et ledit film fonctionnel respectivement sur les premier et deuxième dispositifs de réception sont réalisées de sorte que ladite face courbe dudit substrat et une face dudit film fonctionnel prévue pour être appliquée sur ladite face courbe dudit substrat soient tournées dans une même direction axiale, et l'étape de placer ladite face courbe dudit substrat ophtalmique en regard de ladite face dudit film fonctionnel préformé prévue pour être appliquée sur ladite face courbe dudit substrat est réalisée en retournant au moins un desdits premier et deuxième dispositifs de réception ;
- l'étape d'appliquer ledit film sur ledit substrat est réalisée de manière contrôlée sous une vitesse constante prédéterminée de rapprochement des premier et deuxième dispositifs de réception l'un par rapport à l'autre, notamment de l'ordre par exemple de 0,05 à 20 millimètres/seconde, préférentiellement de l'ordre de 0,3 à 0,5 millimètre/seconde ;
- le procédé de fabrication comporte, après ladite étape d'appliquer ledit film fonctionnel avec ledit substrat ophtalmique, une étape d'application dans ladite première enceinte une pression par exemple comprise entre 0 et 5 bars, préférentiellement comprise entre 1,5 et 3,5 bars, pendant une durée par exemple comprise entre 30 secondes et 10 minutes ;
- les étapes dudit procédé de report sont toutes réalisées à une température sensiblement égale à la température ambiante ;
- le procédé de fabrication comporte en outre un procédé de préformage dudit film fonctionnel, notamment par thermoformage, pour donner une courbure audit film fonctionnel avant la mise en œuvre dudit procédé de report ;
- le procédé de fabrication comporte en outre un traitement thermique de ladite lentille ophtalmique obtenue à l'issue dudit procédé de report ; et/ou
- le procédé de fabrication comporte une étape de sélection dudit film fonctionnel préformé parmi une pluralité de films fonctionnels préformés, une étape de sélection dudit substrat ophtalmique parmi une pluralité de substrats et une étape de fourniture de ladite machine de report pour la mise en œuvre dudit procédé de report dudit film fonctionnel préformé sélectionné sur ladite face courbe dudit substrat sélectionné.

### BREVE DESCRIPTION DES DESSINS

L'exposé de l'invention sera maintenant poursuivi par la description détaillée d'exemples de réalisation, donnée ci-après à titre illustratif et non limitatif, en référence aux dessins annexés, sur lesquels :
- la figure 1 représente en perspective une machine configurée pour reporter un film fonctionnel préformé sur une face courbe d'un substrat ophtalmique, selon un premier mode de réalisation de l'invention ;
- les figures 2 à 6 sont des vues partielles de la machine illustrée sur la figure 1, en perspective ou en coupe, dans différentes configurations de la machine, pour procéder au report du film sur le substrat ;
- la figure 7 est une vue similaire à celle de la figure 1, lorsque le film a été reporté sur le substrat ;
- les figures 8 à 14 sont des vues similaires à celles des figures 1 à 7 et illustrent ici une machine configurée pour reporter un film fonctionnel préformé sur une face courbe d'un substrat ophtalmique, selon un deuxième mode de réalisation de l'invention ;
- la figure 15 est une vue partielle en perspective d'une variante de réalisation de la machine illustrée sur la figure 8 ;
- les figures 16 à 22 sont des vues partielles de la machine illustrée sur la figure 15, en perspective ou en coupe, dans différentes configurations de la machine, pour procéder au report du film sur le substrat ;
- la figure 23 est une vue similaire à celle de la figure 15, lorsque le film a été reporté sur le substrat ; et
- les figures 24 et 25 sont des schéma-blocs illustrant différentes étapes de procédés de fabrication de lentilles ophtalmiques, mettant chacun en œuvre un procédé de report à l'aide d'une des machines des figures 1 à 23.

### DESCRIPTION DETAILLEE D'EXEMPLES DE REALISATION

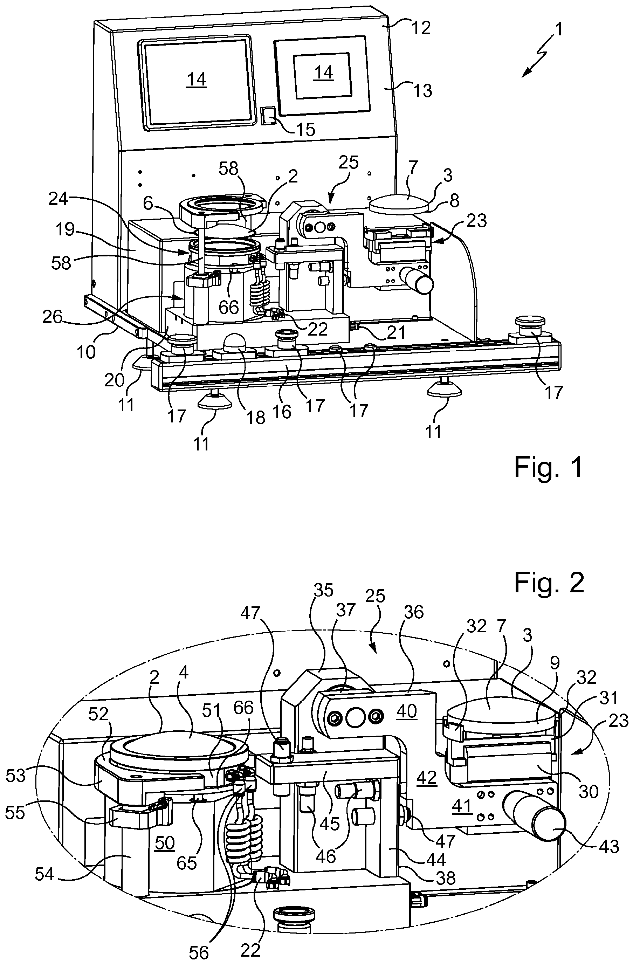

Les figures 1 à 7 illustrent une machine 1 configurée pour reporter un film fonctionnel préformé 2 sur un substrat ophtalmique 3.

Le film fonctionnel préformé 2 présente une première face 4, une deuxième face 5 opposée à sa première face 4, ainsi qu'un pourtour circulaire 6 à sa périphérie (figures 1 à 3).

Le film fonctionnel préformé 2 peut présenter une fonction anti-choc, une fonction anti-rayures, une fonction de réflexion telle que anti-reflet ou miroir, une fonction polarisante, une fonction de filtration sélective ou non, une fonction photochromique, une fonction électrochromique, une fonction anti-statique, une fonction anti-salissure, une fonction anti-buée voire anti-pluie, une fonction de collage ou la combinaison d'une ou plusieurs de ces fonctions.

Le substrat ophtalmique 3 présente quant à lui une première face courbe 7, une deuxième face 8 opposée à sa première face courbe 7, ainsi qu'une tranche périphérique 9 raccordant sa première face courbe 7 et sa deuxième face 8 (figures 1 à 3).

Ici, la première face courbe 7 du substrat 3 est convexe et sa deuxième face 8 est elle aussi courbe et plus particulièrement concave. Ce substrat 3 forme ici soit un « semi-fini » soit un « fini », ainsi que défini ci-avant. En variante, il pourrait s'agir d'un support pour un verre piano.

La première face 4 du film 2 est prévue pour être appliquée sur la première face courbe et convexe 7 du substrat 3. En variante, la première face courbe du substrat pourrait être concave plutôt que convexe.

La machine 1 est ici compacte et peut par exemple être disposée sur une table ou un plan de travail. Cette machine 1 comporte un bâti 10 monté sur des pieds réglables 11.

La machine 1 comporte un coffret de contrôle et de commande 12 monté à l'arrière du bâti 10 et présentant une face frontale 13 dans laquelle sont logées des interfaces graphiques 14 formées par exemple par des écrans tactiles, ainsi qu'un interrupteur 15 de mise en marche et d'arrêt de la machine 1.

Le coffret de contrôle et de commande 12 présente un espace interne dans lequel sont logés un système de traitement de données comportant par exemple un microprocesseur et des mémoires et un système d'alimentation électrique (non illustrés).

La machine 1 comporte une réglette de contrôle et de commande 16 montée à l'avant du bâti 10 et formant, avec le coffret de commande 12, plus généralement une unité de contrôle et de commande de la machine 1. Cette réglette de contrôle et de commande 16 est ici pourvue d'une pluralité de boutons de commande 17 et d'un voyant lumineux 18.

La machine 1 comporte un capot 19 monté sur le bâti 10, entre le coffret 12 et la réglette 16, ainsi qu'une semelle 20 montée également sur le bâti 10, entre le capot 19 et la réglette 16. La semelle 20 est pourvue, sur une face latérale, de premiers raccords d'entrée et de sortie d'un fluide 21 et, sur une face supérieure, de seconds raccords d'entrée et de sortie d'un fluide 22.

La machine 1 comporte en outre un premier dispositif de réception 23 configuré pour recevoir et maintenir le substrat 3 dans une première position prédéterminée, un deuxième dispositif de réception 24, distinct du premier dispositif de réception 23, configuré pour maintenir le film 2 dans une deuxième position prédéterminée et disposé sur un premier côté de la semelle 20, un premier mécanisme de mise en mouvement 25 disposé sur un second côté de la semelle 20, opposé au premier côté, et configuré pour mettre en mouvement le premier dispositif de réception 23, ainsi qu'un deuxième mécanisme de mise en mouvement 26 disposé sur le premier côté de la semelle 20 et configuré pour mettre en mouvement le deuxième dispositif de réception 24.

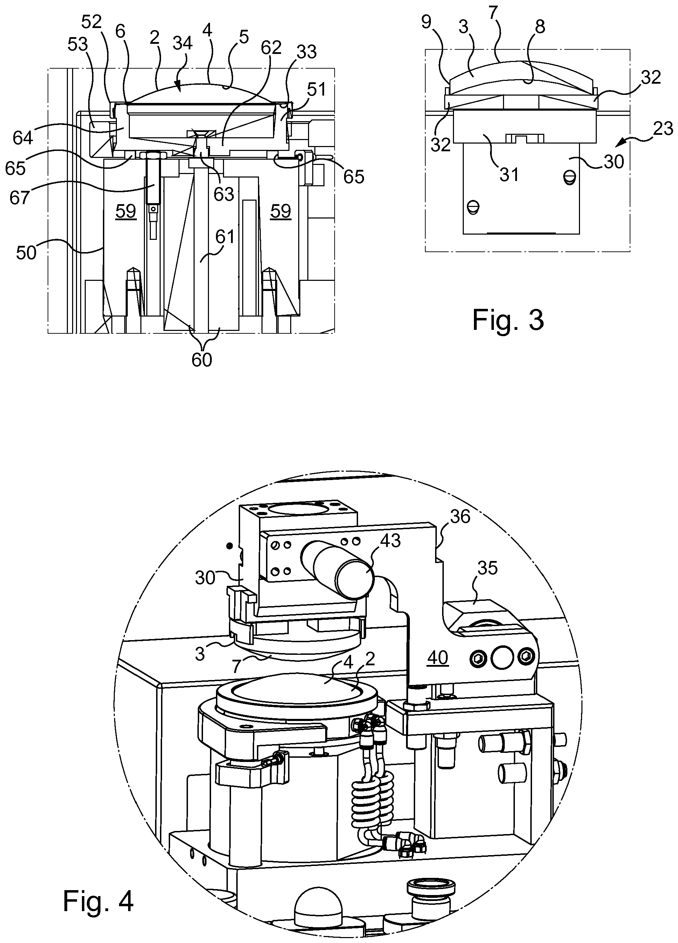

On va décrire plus en détails en référence aux figures 2 et 3 les premier dispositif de réception 23, deuxième dispositif de réception 24, premier mécanisme de mise en mouvement 25 et deuxième mécanisme de mise en mouvement 26.

Le premier dispositif de réception est ici formé par une pince 23 pourvue d'un corps 30, d'un rail 31 logé partiellement dans une encoche ménagée dans le corps 30, et de deux mors 32 fixés solidairement sur le rail 31 et disposés en regard l'un de l'autre et à une distance prédéterminée. Le rail 31 n'est pas libre en translation dans l'encoche du corps 30. La distance entre les mors 32 peut être adaptée par le positionnement des mors 32 sur le rail 31.

Les mors 32 sont configurés pour recevoir le substrat 3 dans la première position prédéterminée et le maintenir par sa tranche 9, afin que le substrat 3 puisse être automatiquement centré dans la pince 23.

Le premier mécanisme de mise en mouvement 25 comporte un palier central 35 fixé sur le second côté de la semelle 20 et s'étendant verticalement depuis sa face supérieure, un bras mobile 36 assujetti mécaniquement au palier central 35 par une liaison pivot 37 située à une extrémité du palier 35, à distance de la semelle 20, ainsi qu'une pièce en équerre 38 montée adjacente au palier central 35, sur la semelle 20.

Le bras mobile 36 présente une portion centrale 42 s'étendant suivant une direction transversale, une portion d'assujettissement 40 s'étendant depuis une première extrémité de la portion centrale 42 suivant une direction longitudinale et par laquelle le bras mobile 36 est fixé sur le palier 35, ainsi qu'une portion support 41 s'étendant depuis une seconde extrémité de la portion centrale 42, opposée à sa première extrémité, suivant une direction longitudinale opposée à la portion d'assujettissement 40.

Le corps 30 de la pince 23 est fixé solidairement sur la portion support 41 du bras mobile 36 et ce dernier est en outre pourvu d'une manette d'actionnement manuel 43.

La pièce en équerre 38 présente une première branche horizontale 45 disposée sensiblement au droit de la portion d'assujettissement 40, s'étendant au moins partiellement en regard de cette dernière, et qui est pourvue d'une extrémité libre tournée vers le deuxième dispositif de réception 24.

La pièce en équerre 38 présente en outre une seconde branche verticale 44 s'étendant depuis la première branche horizontale 45 et reposant sur la semelle 20.

La pièce en équerre 38 est pourvue, sur chacune de ses première et deuxième branches 45 et 44, d'un organe de butée 46, par exemple réglable et à amortisseur, et d'un détecteur de position 47.

L'organe de butée 46 et le détecteur de position 47 situés sur la première branche horizontale 45 sont configurés pour coopérer avec une face de la portion d'assujettissement 40 du bras mobile 36 ; tandis que l'organe de butée 46 et le détecteur de position 47 situés sur la seconde branche verticale 44 sont configurés pour coopérer avec une face de la portion centrale 42 du bras mobile 36, par exemple au niveau de sa seconde extrémité d'où s'étend la portion support 41.

Le deuxième dispositif de réception 24 et le deuxième mécanisme de mise en mouvement 26 sont ici agencés dans un même ensemble comportant un corps 50 fixé sur la semelle 20, une tête 51 mobile par rapport au corps 50 et formant une base horizontale de réception du film 2, aussi appelé bol, une bague 52 annulaire prévue pour couvrir partiellement la tête 51 de sorte à maintenir en position le film 2, une couronne 53 supportant au moins temporairement la bague 52, ainsi que des actionneurs 54 fixés sur le corps 50 par l'intermédiaire de brides 55 et configurés pour déplacer la couronne 53.

Cet agencement permet de centrer automatiquement ou à tout le moins de manière très précise le film 2 sur la tête 51.

La tête 51 présente une paroi latérale 64 dans laquelle sont ménagés des orifices (non illustrés) qui débouchent dans un espace interne de la tête 51 et qui communiquent avec des troisièmes raccords d'entrée et de sortie d'un fluide 56, lesquels sont raccordés par l'intermédiaire de conduits 57 aux seconds raccords d'entrée et de sortie d'un fluide 22.

Chaque actionneur 54 est pourvu d'une tige mobile 58 fixée solidairement à la couronne 53.

La couronne 53 présente ici une forme semi-circulaire et est pourvue d'un siège pour porter la bague 52.

Le corps 50 comporte une partie fixe 59 assujettie mécaniquement à la semelle 20, un actionneur central 60 monté dans la partie fixe 59 et pourvu d'une tige 61 mobile par rapport au corps 50 et qui est fixée solidairement par une extrémité 63 à une paroi de fond 62 de la tête 51 pour entraîner cette dernière verticalement en translation.

L'ensemble comporte en outre des axes de guidage 65 montés partiellement dans la partie fixe 59 du corps 50 et mobiles par rapport à cette dernière, avec ces axes de guidage 65 qui sont fixés solidairement à la tête 51, au niveau d'une collerette 66 ménagée en saillie de sa paroi latérale 64 ; ainsi qu'un organe de butée 67, par exemple ici du type mécanique et à palpeur, monté partiellement dans la partie fixe 59 du corps 50 et mobile par rapport à cette dernière, avec cette butée mécanique 67 qui est fixée solidairement sous la paroi de fond 62 de la tête 51.

On notera que lorsque le film 2 est reçu dans la tête 51 dans sa deuxième position prédéterminée et maintenu en position par la bague 52, une première enceinte fermée 34 est ainsi formée, assimilable à une chambre étanche.

On va maintenant décrire le fonctionnement de la machine 1 décrite ci-dessus et visible sur les figures 1 à 7 dans cinq configurations différentes.

Sur la figure 1, la machine 1 est dans une configuration de repos où le film 2 et le substrat 3 ne sont pas montés respectivement sur la tête 51 et sur la pince 23.

Dans cette configuration de repos, le bras mobile 36 est dans une première position où la portion support 41 et donc la pince 23 se trouvent en porte-à-faux vis-à-vis de la semelle 20.

La pince 23 est ainsi facilement accessible et le montage du substrat 3 dans sa première position prédéterminée entre les mors 32 de la pince 23 est simple, commode et précis.

Dans cette configuration de repos, les tiges mobiles 58 des actionneurs 54 sont dans une position déployée. La couronne 53 et la bague 52 qu'elle porte sont alors dans une position haute, laissant un passage pour la mise en place du film préformé 2, dans sa deuxième position prédéterminée, sur la tête 51.

Sur les figures 2 et 3, la machine 1 est dans une configuration de serrage où le film 2 et le substrat 3 sont montés et maintenus respectivement sur la tête 51 et sur la pince 23, dans leur position respective prédéterminée.

Le substrat 3 est ainsi dans sa première position prédéterminée serré par les mors 32 de la pince 23.

Le pourtour 6 du film 2 est disposé sur un bord supérieur 33 de la tête 51.

Les tiges mobiles 58 des actionneurs 54 sont dans une position rétractée amenant ainsi la couronne 53 dans une position basse.

La bague 52 est quant à elle dans une position intermédiaire entre sa position haute et la position basse de la couronne 53, position intermédiaire où elle repose sur le bord supérieur 33 de la tête 51, couvre partiellement sa paroi latérale 64 et enserre le pourtour 6 du film 2, sous une force de pression prédéterminée appliquée sur ce pourtour 6 de manière sensiblement équi-répartie sur ce dernier.

Dans la configuration de serrage, la face courbe 7 du substrat 3 et la première face 4 du film 2 qui est prévue pour être appliquée sur cette face courbe 7 sont chacune tournée dans une même direction axiale.

La machine 1 est configurée de sorte que le centre du cercle passant par les centres géométriques du film et du substrat se trouve dans l'axe de la liaison pivot 37, laquelle liaison est ici disposée à équidistance de chacun de ces centres géométriques.

Dans la configuration de serrage, l'unité de contrôle et de commande est configurée pour générer, notamment par l'intermédiaire des raccords 21, 22 et 56 et des conduits 57, une différence positive de pression au sein de la première enceinte fermée et étanche 34 par rapport à son environnement immédiat (ici l'air ambiant) de sorte à mettre en tension le film fonctionnel préformé 2.

La différence positive de pression au sein de la première enceinte 34 par rapport à son environnement immédiat est par exemple comprise entre 0,1 et 1 bar, préférentiellement comprise entre 0,1 et 0,5 bar, et encore préférentiellement égale à environ 0,25 bar.

L'augmentation de pression ainsi générée dans la première enceinte 34 et la tension du film 2 en résultant permettent d'appliquer une pression identique sur toute la surface du film 2 et ainsi d'uniformiser la répartition des contraintes sur cette surface.

Cette augmentation de pression peut être considérée comme une mise en surpression au moins relative par rapport à l'extérieur de la première enceinte 34, ou comme une mise en dépression de l'environnement immédiat de la première enceinte 34, par rapport à cette dernière. Cette augmentation de pression peut être considérée encore comme une mise en surpression au moins relative par rapport à la première face 4 du film 2, qui est tournée vers l'extérieur de la première enceinte 34.

Sur la figure 4, la machine 1 est dans une configuration de retournement où la face courbe 7 du substrat 3 est mise en regard de la première face 4 du film 2, à distance l'une de l'autre, et avec les centres géométriques respectifs du substrat 3 et du film fonctionnel préformé 2 qui sont alignés (ligne en pointillés sur la figure 4).

Pour ce faire, le bras mobile 36 est actionné, automatiquement via l'unité de contrôle et de commande ou manuellement avec la manette 43, pour être entraîné en rotation autour du palier central 35 jusqu'à ce que la portion d'assujettissement 40 vienne au contact et en butée sur les organe de butée 46 et détecteur de position 47 situés sur la première branche horizontale 45 de la pièce en équerre 38. Le bras mobile 36 passe ainsi d'une première position (figure 2) à une seconde position (figure 4).

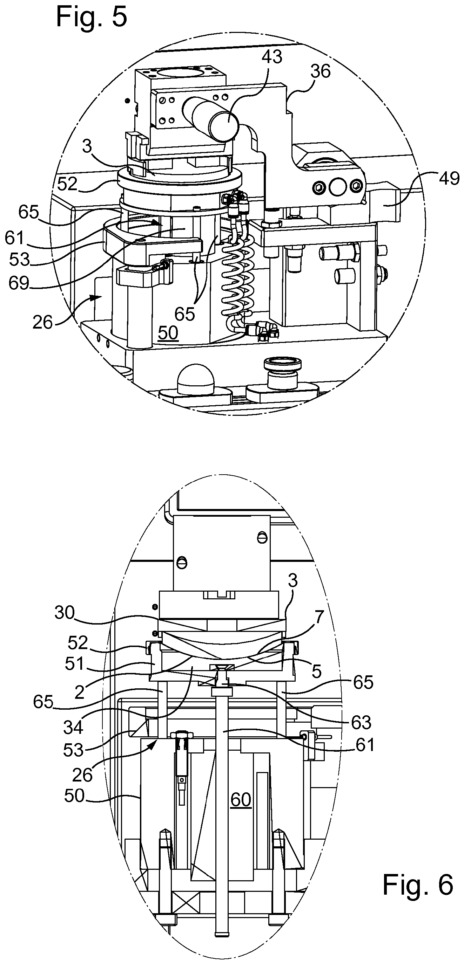

Sur les figures 5 et 6, la machine 1 est dans une configuration de lamination où le centre de la première face 4 du film 2 et le centre de la face courbe 7 du substrat 3 sont mis en contact.

Cette mise en contact permet d'appliquer le film fonctionnel 2 avec le substrat ophtalmique 3, en inversant la courbure du film fonctionnel 2, afin de diffuser radialement à partir du centre du film fonctionnel 2 jusqu'à sa périphérie (au niveau de son pourtour 6) un contact conformal entre le film fonctionnel 2 et la face courbe 7 du substrat 3.

Pour ce faire, l'unité de contrôle et de commande est ici configurée pour agir sur l'actionneur central 60 de sorte à amener la tige mobile 61 dans une position déployée et ainsi translater verticalement la tête 51 vers la pince 23 et vers le substrat 3.

Le déploiement de la tige mobile 61 est accompagné du déploiement d'un organe de calage 69 sensiblement en forme de U, avec la tige mobile 61 qui s'étend dans l'espace interne du U.

L'unité de contrôle et de commande est configurée pour déplacer la tête 51 de manière contrôlée, par exemple sous une vitesse constante prédéterminée de rapprochement de la tête 51 et de la pince 23 l'une par rapport à l'autre, notamment de l'ordre par exemple de 0,05 à 20 millimètres/seconde, préférentiellement de l'ordre de 0,3 à 0,5 millimètre/seconde.

On notera en particulier que l'unité de contrôle et de commande est configurée pour déplacer la tête 51 à la vitesse indiquée ci-dessus, au moins lorsque le film 2 et le substrat 3 sont distants l'un de l'autre de seulement quelques centimètre et/ou qu'ils sont déjà en contact.

L'application du film 2 avec le substrat 3 et l'inversion de courbure du film 2 engendre intrinsèquement une pression dans la première enceinte 34, laquelle pression est contrôlée et régulée à une valeur telle que celles mentionnées plus haut, par exemple 0,25 bar.

On notera qu'en fin d'étape de lamination (après l'inversion de courbure du film), la pression peut être contrôlée et régulée de sorte à être comprise par exemple entre 0 et 5 bars, préférentiellement comprise entre 1,5 et 3,5 bars, pendant une durée par exemple comprise entre 30 secondes et 10 minutes.

Une telle étape dans laquelle la pression est contrôlée dans la première enceinte 34 peut notamment permettre de maintenir plaqué le film 2 sur le substrat 3 après lamination et aussi d'amorcer le procédé intrinsèque de collage entre ces éléments, en particulier dans le cas où une couche adhésive sensible à la pression revêt initialement au moins partiellement le substrat 3.

Durant la lamination, le bras mobile 36 est maintenu dans sa seconde position, par exemple au moyen d'une cale 49 ici interposée entre la portion d'assujettissement 40 du bras mobile 36 et la première branche horizontale 45 de la pièce en équerre 38.

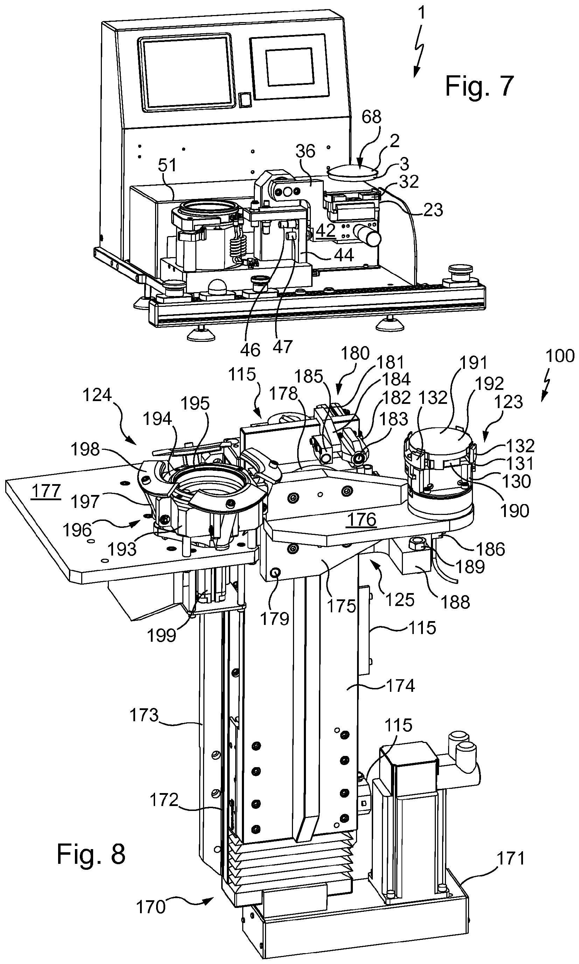

Sur la figure 7, la machine 1 est de nouveau dans sa configuration de repos et l'ensemble film fonctionnel préformé et substrat 3 forme une lentille ophtalmique 68.

Pour ce faire, la bague 52 a été retirée de la tête 51, le bras 36 a été actionné pour revenir avec l'ensemble laminé dans sa première position, où la portion centrale 42 vient au contact et en butée sur les organe de butée 46 et le détecteur de position 47 situés sur la deuxième branche verticale 44 de la pièce en équerre 38, et la lentille ophtalmique 68 ainsi formée a été retirée des mors 32 de la pince 23.

En variante, à la fin de la lamination, les mors 32 sont ouverts, le bras 36 est actionné pour revenir sans l'ensemble laminé dans sa première position, puis on retire la bague 52 de la tête 51 pour libérer la lentille ophtalmique 68 ainsi formée.

Les figures 8 à 14 illustrent une machine 100 configurée pour reporter un film fonctionnel préformé 102 sur un substrat ophtalmique 103.

Le film fonctionnel préformé 102 et le substrat ophtalmique 103 sont ici similaires au film fonctionnel préformé 2 et au substrat ophtalmique 3 décrits en référence aux figures 1 à 7.

La machine 100 comporte un système élévateur 170 pourvue d'une base 171 et d'un châssis ayant une partie fixe 172 montée sur une platine support 173 de la machine 100 et une partie mobile 174 par rapport à la partie fixe 172.

La machine 100 comporte plusieurs sous unités de contrôle et de commande 115 formant plus globalement une unité de contrôle et de commande de la machine 100, présentant un système de traitement de données comportant par exemple un microprocesseur et des mémoires, ainsi qu'un système d'alimentation électrique (non illustrés).

La machine 100 comporte un plateau mobile 175 qui est monté rotatif sur la partie mobile 174 du système élévateur 170 par l'intermédiaire d'un organe d'entraînement 178 et sur lequel est fixé solidairement une première plaque support 176 s'étendant depuis le plateau mobile 175 vers un premier côté de la machine 100 ; ainsi qu'une seconde plaque support 177 fixée solidairement à la platine support 173 et/ou à la partie fixe 172 du système élévateur, sur un second côté de la machine 100, opposée au premier côté.

La machine 100 comporte en outre un premier dispositif de réception 123 disposé sur la première plaque support 176, du premier côté de la machine 100, et configuré pour recevoir et maintenir le substrat 103 dans une première position prédéterminée ; ainsi qu'un deuxième dispositif de réception 124, distinct du premier dispositif de réception 123, disposé sur la seconde plaque support 177 du second côté de la machine 100 et configuré pour maintenir le film 102 dans une deuxième position prédéterminée.

L'organe d'entraînement 178 et le plateau mobile 175 forment ici un premier mécanisme de mise en mouvement 125 et le système élévateur 170 forme ici un deuxième mécanisme de mise en mouvement ; avec ces premier et deuxième mécanismes qui sont chacun configurés pour mettre en mouvement le premier dispositif de réception 123.

La machine 100 comporte un actionneur de verrouillage 180 monté à une extrémité libre de la partie mobile 174 du système élévateur 170 qui est opposée à la base 171.

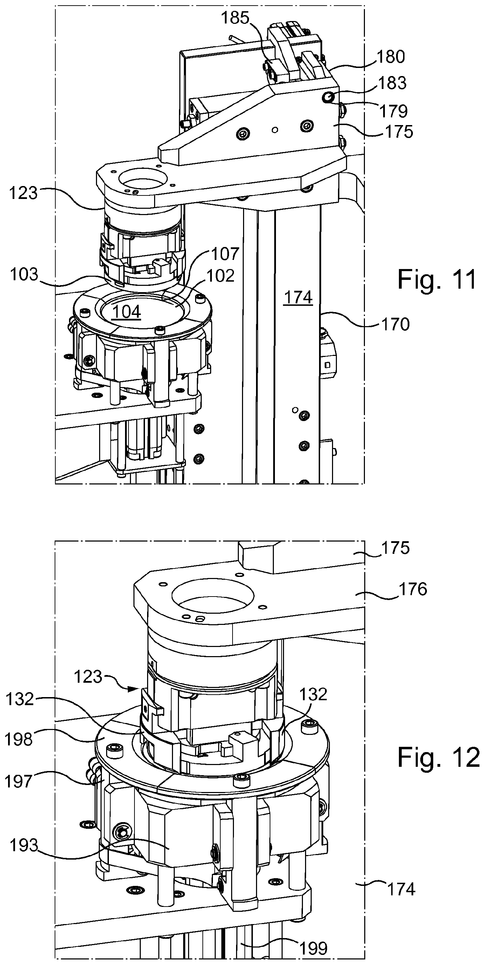

Cet actionneur de verrouillage 180 présente un corps 181 et une tête 182 de laquelle saille un doigt de verrouillage 183 configuré pour s'introduire dans un orifice 179 ménagé dans le plateau mobile 175, lorsque ce dernier est passé d'une première position (figure 8) à une deuxième position (figure 11).

La machine 100 comporte en outre un premier détecteur de position 185 monté sur une première bride 184 fixée sur la partie mobile 174 au niveau de son extrémité libre et ici à proximité immédiate de la tête 182 de l'actionneur de verrouillage 180.

La machine 100 comporte en outre un second détecteur de position 186 monté sur une seconde bride 187, elle-même montée sur une équerre 188 fixée sur la partie mobile 174 du système élévateur 170 ; ainsi qu'un organe de butée 189 disposé sur l'équerre 188.

L'équerre 188 est située sur la partie mobile 174 de sorte que, lorsque le plateau mobile 175 est dans sa première position, la première plaque support 176 vient au contact et en butée du second détecteur de position 186 et de l'organe de butée 189.

On va décrire plus en détails en référence aux figures 8 à 10, les premier dispositif de réception 123 et deuxième dispositif de réception 124.

Le premier dispositif de réception est ici formé par une pince 123 pourvue d'un corps 130, de deux rails 131 logés partiellement dans une encoche ménagée dans le corps 130, et de deux mors 132 fixés chacun solidairement sur un des rails 131 et disposés en regard l'un de l'autre et à une distance prédéterminée. Les rails 131 ne sont pas libres en translation dans l'encoche du corps 130. La distance entre les mors 132 peut être adaptée par le positionnement des mors 132 sur les rails 131.

Le corps 130 est fixé solidairement à une extrémité de la première plaque support 176 et peut comporter des orifices communiquant avec des raccords d'entrée et de sortie d'un fluide (non représentés).

La pince 123 comporte en outre un organe de centrage 190 monté sur les rails 131, entre les deux mors 132, ainsi qu'une contre-forme 191, formant un support pour le substrat 103, posée sur l'organe de centrage 190 et enserrée entre les deux mors 132.

Les mors 132 sont également configurés pour recevoir le substrat 103 dans la première position prédéterminée et le maintenir par sa tranche 109 ; afin que le substrat 103 puisse être automatiquement centré dans la pince 123.

La contre-forme 191 présente une face externe courbe 192 qui se conforme avec la deuxième face 108 du substrat 103.

Le deuxième dispositif de réception 124 comporte une cloche 193 montée sur une face supérieure de la seconde plaque support 177 et formant sensiblement un bol pour la réception du film 102, un disque 194 monté sur un bord supérieur de la cloche 193, un premier joint (non représenté) interposé et enserré entre le disque 194 et ce bord supérieur, ainsi qu'un second joint 195 monté sur un épaulement du disque 194.

La cloche 193 présente une paroi dans laquelle sont ménagés des orifices (non illustrés) qui débouchent dans un espace interne de la cloche 193 et qui communiquent avec des raccords d'entrée et de sortie d'un fluide (non illustrés).

Le deuxième dispositif de réception 124 comporte en outre un mécanisme de serrage 196 formé par une pluralité de bras articulés 197 (ici au nombre de quatre) présentant chacun une pince d'extrémité 198 et qui sont disposés sur la face supérieure de la seconde plaque support 177 ; et par un actionneur central 199 globalement disposé du côté d'une face inférieure de la seconde plaque support 177, opposée à sa face supérieure, et agissant sur les bras articulés 197 au travers d'un trou ménagé dans la seconde plaque support 177.

Chaque bras articulé 197 est pourvu à une première extrémité d'un organe d'ajustement 139, ici un système vis-ressort introduit dans un puits ménagé dans le bras articulé 197, et est configuré pour ajuster la position de la pince d'extrémité 198 par rapport au bras 197 et ainsi enserrer le pourtour 106 du film 102 entre cette pince 198 et le second joint 195 monté sur l'épaulement du disque 194.

Cet agencement permet de centrer automatiquement ou à tout le moins de manière très précise le film 102 sur le bol 193.

Chaque bras articulé 197 est en outre pourvu à une deuxième extrémité opposée à la première extrémité, d'un dispositif de basculement 206 à roulette et organe de rappel élastique.

L'actionneur central 199 comporte un corps 209 et une tige 201 mobile par rapport au corps 209. Cette tige 201 est pourvue à une extrémité libre 202, d'un embout 203 présentant des pattes d'actionnement 204 (ici quatre) qui sont pourvues chacune d'un bord d'attaque 205 configuré pour coopérer avec le dispositif de basculement 206 et en particulier la roulette, de chaque bras articulé 197 respectif.

On notera que lorsque le film 102 est reçu dans la cloche 193 dans sa deuxième position prédéterminée et maintenu en position par le disque 194 et les bras articulés 197, une première enceinte fermée 134 est ainsi formée, assimilable à une chambre étanche.

On va maintenant décrire le fonctionnement de la machine 100 décrite ci-dessus et visible sur les figures 8 à 14 dans cinq configurations différentes, similaires aux configurations de la machine 1 décrite ci-dessus.

Sur la figure 8, la machine 100 est dans une configuration de repos où la pince 123 n'enserre pas le substrat 103 (non visible sur cette figure) et les bras articulés 197 sont en position écartée et le film 102 (non visible sur cette figure) n'est pas monté dans la cloche 193.

Dans cette configuration de repos, le plateau mobile 175 est dans sa première position où la première plaque support 176 et donc la pince 123 se trouvent du premier côté de la machine 100.

La pince 123 est ainsi facilement accessible et le montage du substrat 103 dans sa première position prédéterminée entre les mors 132 de la pince 123 est simple, commode et précis.

Dans cette configuration de repos, la tige 201 de l'actionneur central 199 est dans une position déployée (non visible) et les bords d'attaque 205 des pattes 204 de l'embout 203 de la tige 201 ne sollicitent pas les dispositifs de basculement 206 des bras articulés 197 à l'encontre des organes de rappel élastique, lesquels sollicitent donc les bras 197 en position écartée.

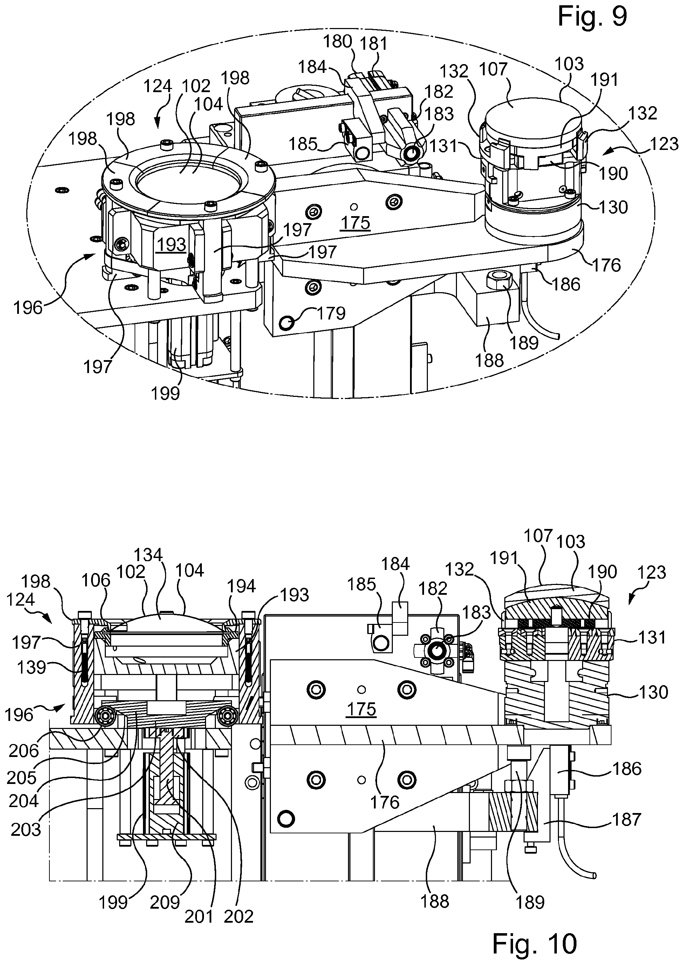

Sur les figures 9 et 10, la machine 100 est dans une configuration de serrage où le film 102 et le substrat 103 sont montés et maintenus respectivement sur la cloche 193 et sur la pince 123, dans leur position respective prédéterminée.

Le substrat 103 est ainsi monté sur la contre-forme 191, dans sa première position prédéterminée, et est serré par les mors 132 de la pince 123.

Le pourtour 106 du film 102 est posé sur le joint 195 monté dans l'épaulement ménagé sur le disque 194 de la cloche 193.

Dans cette configuration de serrage, la tige 201 de l'actionneur central 199 est dans une position rétractée et les bords d'attaque 205 des pattes 204 de l'embout 203 de la tige 201 sollicitent les dispositifs de basculement 206 des bras articulés 197 à l'encontre des organes de rappel élastique et déplacent les bras 197 dans une position rapprochée, où les pinces d'extrémité 198 se retrouvent au droit du pourtour 106 du film 102.

Les pinces d'extrémité 198 sont au surplus sollicitées vers le film 102 par l'action des organes d'ajustement 139 pour le serrage vertical de ce film 102 entre les pinces d'extrémité 198 et le joint 195 du disque 194.

Dans la configuration de serrage, la face courbe 107 du substrat 103 et la première face 104 du film 102 qui est prévue pour être appliquée sur cette face courbe 107 sont chacune tournée dans une même direction axiale.

La machine 100 est configurée de sorte que le centre du cercle passant par les centres géométriques du film et du substrat passe par le centre de rotation du plateau mobile 175 au niveau de l'organe d'entraînement 178, lequel centre de rotation est ici disposée à équidistance de chacun de ces centres géométriques.

Dans la configuration de serrage, l'unité de contrôle et de commande est configurée pour générer, notamment par l'intermédiaire des raccords d'entrée et de sortie de fluide et de conduits (non illustrés), une différence positive de pression au sein de la première enceinte fermée et étanche 134 par rapport à son environnement immédiat (ici l'air ambiant) de sorte à mettre en tension le film fonctionnel préformé 102, de la manière décrite plus haut en référence aux figures 1 à 7.

Sur la figure 11, la machine 100 est dans une configuration de retournement où la face courbe 107 du substrat 103 est mise en regard de la première face 104 du film 102, à distance l'une de l'autre, et avec les centres géométriques respectifs du substrat 103 et du film fonctionnel préformé 102 qui sont alignés (ligne en pointillés sur la figure 11).

Pour ce faire, le plateau mobile 175 est actionné, automatiquement via l'unité de contrôle et de commande, pour être entraîné en rotation par rapport à la partie mobile 174 du système élévateur 170 jusqu'à ce que le plateau mobile 175 passe de sa première position (figure 9) à une seconde position (figure 11).

La seconde position du plateau mobile 175 peut être détectée par le détecteur de position 185 et le doigt 183 de l'actionneur de verrouillage 180 peut s'introduire dans l'orifice 179 du plateau mobile, bloquant ainsi le plateau mobile175 dans sa seconde position.

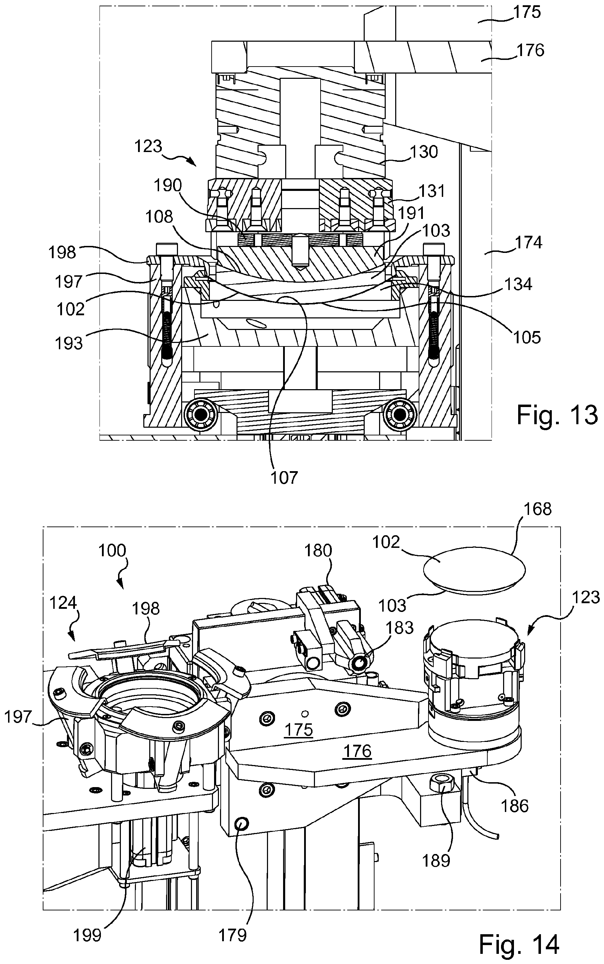

Sur les figures 12 et 13, la machine 100 est dans une configuration de lamination où le centre de la première face 104 du film 102 et le centre de la face courbe 107 du substrat 103 sont mis en contact.

Cette mise en contact permet d'appliquer le film fonctionnel 102 avec le substrat ophtalmique 103, en inversant la courbure du film fonctionnel 102, afin de diffuser radialement à partir du centre du film fonctionnel 102 jusqu'à sa périphérie (au niveau de son pourtour 106) un contact conformal entre le film fonctionnel 102 et la face courbe 107 du substrat 103.

Pour ce faire, l'unité de contrôle et de commande est configurée pour agir sur le système élévateur 170 pour déplacer sa partie mobile 174 et donc la première plaque support 176 sur le plateau mobile 175, vis-à-vis de sa partie fixe 173 et donc vis-à-vis de la second plaque support 177 ; de sorte à translater verticalement la pince 123, et donc le substrat 103, vers la cloche 193 et donc vers le film 102.

Les extrémités libres des mors 132 de la pince 123 viennent se loger au moins partiellement sensiblement contre les pinces d'extrémité 198 des bras articulés 197.

L'unité de contrôle et de commande est configurée pour déplacer la partie mobile 174 du système élévateur 170 de manière contrôlée, par exemple sous une vitesse constante prédéterminée de rapprochement de la cloche 193 et de la pince 123 l'une par rapport à l'autre, notamment de l'ordre par exemple de 0,05 à 20 millimètres/seconde, préférentiellement de l'ordre de 0,3 à 0,5 millimètre/seconde.

L'application du film 102 avec le substrat 103 et l'inversion de courbure du film 102 engendre intrinsèquement une pression dans la première enceinte 134, laquelle pression est contrôlée et régulée par exemple 0,25 bar, de la même manière qu'indiquée plus haut ; et au surplus, en fin d'étape de lamination (après l'inversion de courbure du film), la pression peut être contrôlée et régulée de sorte à être comprise par exemple entre 0 et 5 bars, préférentiellement comprise entre 1,5 et 3,5 bars, pendant une durée par exemple comprise entre 30 secondes et 10 minutes.

Sur la figure 14, la machine 100 est de nouveau dans sa configuration de repos et l'ensemble film fonctionnel préformé 102 et substrat 103 forme une lentille ophtalmique 168.

Pour ce faire, la tige 201 de l'actionneur central 199 est repassée dans une position déployée (non visible) et les bords d'attaque 205 des pattes 204 de l'embout 203 de la tige 201 ne sollicitent pas les dispositifs de basculement 206 des bras articulés 197 à l'encontre des organes de rappel élastique, lesquels sollicitent donc les bras 197 et les pinces 198 en position écartée.

Au surplus, le doigt 183 de l'actionneur de verrouillage 180 a été retirée de l'orifice 179 dans le plateau mobile 175 et ce dernier a été actionné pour revenir avec l'ensemble laminé dans sa première position, où la première plaque support 176 vient au contact et en butée du second détecteur de position 186 et de l'organe de butée 189 ; et la lentille ophtalmique 168 ainsi formée a été retirée des mors 132 de la pince 123.

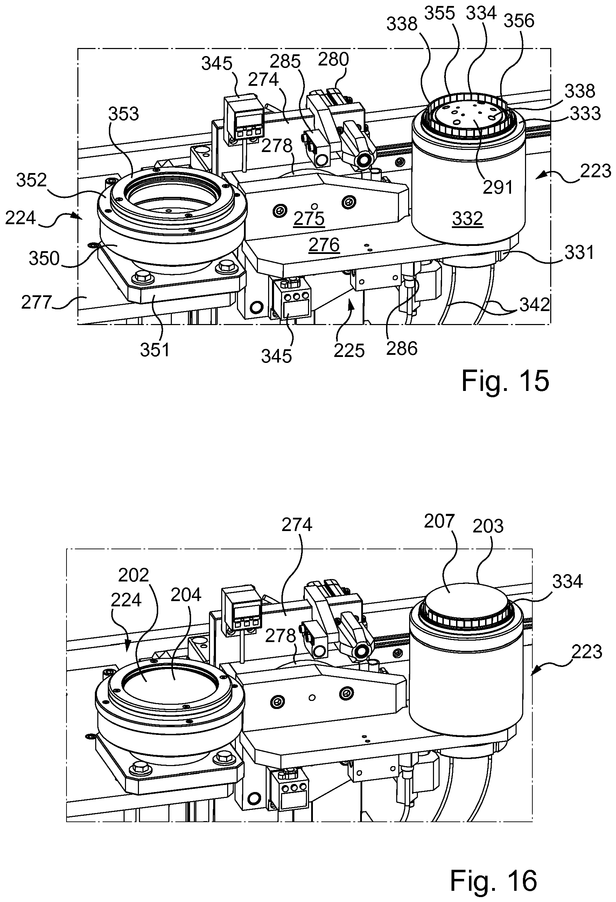

Les figures 15 à 23 représentent une variante de réalisation de la machine 100 illustrée sur les figures 8 à 14. Les mêmes références seront donc reprises pour les éléments similaires, mais additionnées du nombre 100.

La machine 200 comporte un système élévateur 270, un plateau mobile 275, des première et seconde plaques support 276 et 277, un actionneur de verrouillage 280 et des détecteurs de position 285 et 286 similaires à ceux de la machine 100.

La machine 200 comporte également plusieurs sous unités de contrôle et de commande formant plus globalement une unité de contrôle et de commande, présentant un système de traitement de données comportant par exemple un microprocesseur et des mémoires, et un système d'alimentation électrique (non illustrés).

La machine 200 comporte en outre un premier dispositif de réception 223 disposé sur la première plaque support 276, du premier côté de la machine 200, et configuré pour recevoir et maintenir le substrat 203 dans une première position prédéterminée ; ainsi qu'un deuxième dispositif de réception 224, distinct du premier dispositif de réception 223, disposé sur la seconde plaque support 277 du second côté de la machine 200 et configuré pour maintenir le film 202 dans une deuxième position prédéterminée.

L'organe d'entraînement 278 et le plateau mobile 275 forment ici un premier mécanisme de mise en mouvement 225 et le système élévateur 270 forme ici un deuxième mécanisme de mise en mouvement ; avec ces premier et deuxième mécanismes qui sont chacun configurés pour mettre en mouvement le premier dispositif de réception 223.

La machine 200 comporte en outre des capteurs de pression 345 montés sur la partie mobile 274 et/ou sur le plateau mobile 275.

On va décrire plus en détails les premier dispositif de réception 223 et deuxième dispositif de réception 224, qui diffèrent sensiblement des premier et deuxième dispositifs de réception 123 et 124 de la machine 100.

Le premier dispositif de réception 223 comporte une enveloppe cylindrique 332 surmontée d'une bague annulaire d'étanchéité 333 et s'étendant depuis une face supérieure de la première plaque support 276.

Le premier dispositif de réception 223 est fixé sur la première plaque support 276 par l'intermédiaire d'un écrou 331 assujetti mécaniquement sur une face inférieure de cette première plaque support 276.

Le premier dispositif de réception 223 comporte une couronne de centrage 334 partiellement et latéralement entourée par la bague annulaire d'étanchéité 333 ; laquelle couronne 334 est ici pourvue d'une pluralité de fentes et d'orifices 355 formant des languettes 356 sensiblement élastiques et est configurée pour recevoir et enserrer le substrat 203 ; afin que ce dernier puisse être automatiquement centré.

Le premier dispositif de réception 223 comporte un piston mobile 335 disposé dans l'enveloppe cylindrique 332, pourvu à chaque extrémité, d'au moins un organe d'étanchéité 336, et qui est configuré pour coopérer avec la bague annulaire d'étanchéité 333.

Le premier dispositif de réception 223 comporte en outre une colonne fluidique 337 fixe, enveloppée latéralement par le piston mobile 335, et qui s'étend au travers d'un orifice ménagé dans la première plaque support 276.

La colonne fluidique 337 est pourvue de deux canaux de cheminement d'un fluide 338 qui s'étendent le long de la colonne 337, entre des raccords d'entrée et de sortie d'un fluide 339 situés au niveau de l'écrou 331 et raccordés à des conduits externes 342. La colonne fluidique 337 est aussi pourvue d'orifices débouchant (non représentés) à l'extrémité de ces canaux 338, à l'opposé des raccords 339.

Le premier dispositif de réception 223 comporte en outre une contre-forme 291, formant un support pour le substrat 203, fixée solidairement sur la colonne fluidique 337 et au moins partiellement enserrée dans la couronne 334.

La contre-forme 291 est pourvue d'une rainure circulaire 360 dans laquelle est logé un organe d'étanchéité 340 et de plusieurs trous 341 débouchant de part et d'autre de l'épaisseur de la contre-forme 291 et communiquant avec les orifices des canaux de cheminement 338 de la colonne fluidique 337.

On notera que les trous 341 dans la contre-forme 291, les canaux 338, les raccords d'entrée et de sortie de fluide 339 et les conduits 342 servent à faire le vide sous le substrat 203 afin de le maintenir en place par aspiration.

La contre-forme 291 présente une face externe courbe 292 qui se conforme avec la deuxième face 208 du substrat 203.

Le deuxième dispositif de réception 224 comporte une pièce cylindrique appelée ici bol 350, montée sur une platine 351 qui est fixée solidairement sur la seconde plaque support 277, une couronne annulaire 352 qui couvre partiellement le bol 350 et fixée solidairement à ce dernier, un premier joint 361 logé dans un épaulement ménagé dans cette couronne 352 et prévu pour recevoir le film 202, une rondelle 353 montée sur un bord supérieur de la couronne 352 et fixée solidairement à cette dernière, ainsi qu'un second joint d'étanchéité 354 interposée entre le bord supérieur de la couronne 352 et la rondelle 353.

Cet agencement et en particulier la couronne 352, son épaulement, et le premier joint d'étanchéité 361 définissent un logement pour le film 202 qui est ainsi centrer automatiquement ou à tout le moins positionner de manière très précise sur le bol 350.

Des orifices (non représentés) peuvent être ménagés dans une paroi du bol 350 et déboucher dans un espace interne de ce dernier. Le cas échéant, ces orifices peuvent communiquer avec des raccords d'entrée et de sortie d'un fluide (non illustrés).

On notera que lorsque le film 202 est reçu dans le bol 350 dans sa deuxième position prédéterminée et maintenu en position, une première enceinte fermée 234 est ainsi formée, assimilable à une chambre étanche.

On va maintenant décrire le fonctionnement de la machine 200 décrite ci-dessus et visible sur les figures 15 à 23 dans des configurations différentes, assez similaires aux configurations de la machine 100 décrite ci-dessus.

Sur la figure 15, la machine 200 est dans une configuration de repos où le dispositif 223 n'enserre pas le substrat 203 (non visible sur cette figure) et le film 202 (non visible sur cette figure) n'est pas monté dans le bol 350.

Dans cette configuration de repos, le plateau mobile 275 est dans sa première position où la première plaque support 276 et donc le dispositif 223 se trouvent du premier côté de la machine 200.

Le dispositif 223 est ainsi facilement accessible et le montage du substrat 203 dans sa première position prédéterminée enserrée entre les languettes 356 de la couronne 334 est simple, commode et précis.

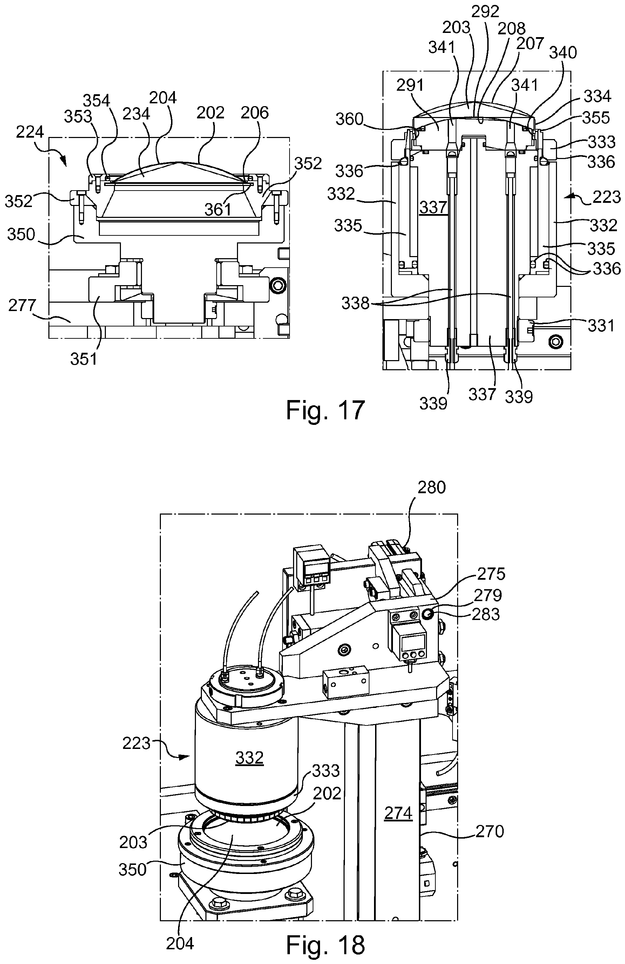

Sur les figures 16 et 17, la machine 200 est dans une configuration de serrage où le film 202 et le substrat 203 sont montés et maintenus respectivement sur le bol 350 et dans la couronne 334, dans leur position respective prédéterminée.

Le substrat 203 est ainsi monté sur la contre-forme 291, dans sa première position prédéterminée, et est serré dans la couronne 334 du dispositif 223.

Le pourtour 206 du film 202 est posé sur le premier joint 361logé dans l'épaulement ménagé dans la couronne 352.

Dans la configuration de serrage, la face courbe 207 du substrat 203 et la première face 204 du film 202 qui est prévue pour être appliquée sur cette face courbe 207 sont chacune tournée dans une même direction axiale.

La machine 200 est configurée de sorte que le centre du cercle passant par les centres géométriques du film et du substrat passe par le centre de rotation du plateau mobile 275 au niveau de l'organe d'entraînement, lequel centre de rotation est ici disposée à équidistance de chacun de ces centres géométriques.

Sur la figure 18, la machine 200 est dans une configuration de retournement où la face courbe 207 du substrat 203 est mise en regard de la première face 204 du film 202, à distance l'une de l'autre, et avec les centres géométriques respectifs du substrat 203 et du film fonctionnel préformé 202 qui sont alignés.

Pour ce faire, le plateau mobile 275 est actionné, automatiquement via l'unité de contrôle et de commande, pour être entraîné en rotation par rapport à la partie mobile 274 du système élévateur 270 jusqu'à ce que le plateau mobile 275 passe de sa première position (figure 16) à une seconde position (figure 18).

La seconde position du plateau mobile 275 peut être détectée par le détecteur de position 285 et le doigt 283 de l'actionneur de verrouillage 280 peut s'introduire dans l'orifice 279 du plateau mobile, bloquant ainsi le plateau mobile275 dans sa seconde position.

Dans la configuration de retournement, le piston mobile 335 se trouve dans une position rétractée dans l'enveloppe cylindrique 332 du dispositif 223.

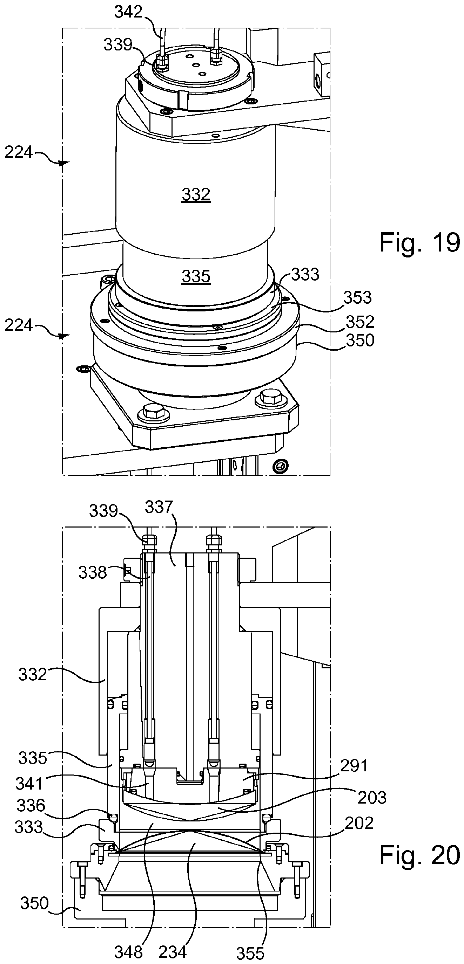

Sur les figures 19 et 20, la machine 200 est dans une configuration de pré-lamination où le piston mobile 335 est commandé pour passer de sa position rétractée à une position déployée, entraînant la bague annulaire d'étanchéité 333 jusqu'à la mettre en contact, par un bord d'extrémité 355, avec le pourtour 206 du film 202 et sensiblement en contact avec le second joint 354 sur la rondelle 353 du dispositif 224.

Une deuxième enceinte fermée 348 est ainsi formée, assimilable à une chambre étanche, et délimitée notamment par la face courbe 207 du substrat 203 et la première face 204 du film 202.

Dans la configuration de pré-lamination, l'unité de contrôle et de commande peut être configurée pour générer, notamment par l'intermédiaire des raccords d'entrée et de sortie de fluide et de conduits (non illustrés), une différence positive de pression au sein de la première enceinte fermée 234 par rapport à son environnement immédiat (ici l'air ambiant) de sorte à mettre en tension le film fonctionnel préformé 202, de la manière décrite plus haut

Dans la configuration de pré-lamination, l'unité de contrôle et de commande est en outre configurée pour générer, par exemple par aspiration et notamment par l'intermédiaire des fentes et orifices 355 de la couronne 334 une différence négative de pression au sein de la deuxième enceinte fermée et étanche 348 par rapport à la première enceinte 234 par l'intermédiaire d'un système d'aspiration (non illustré).

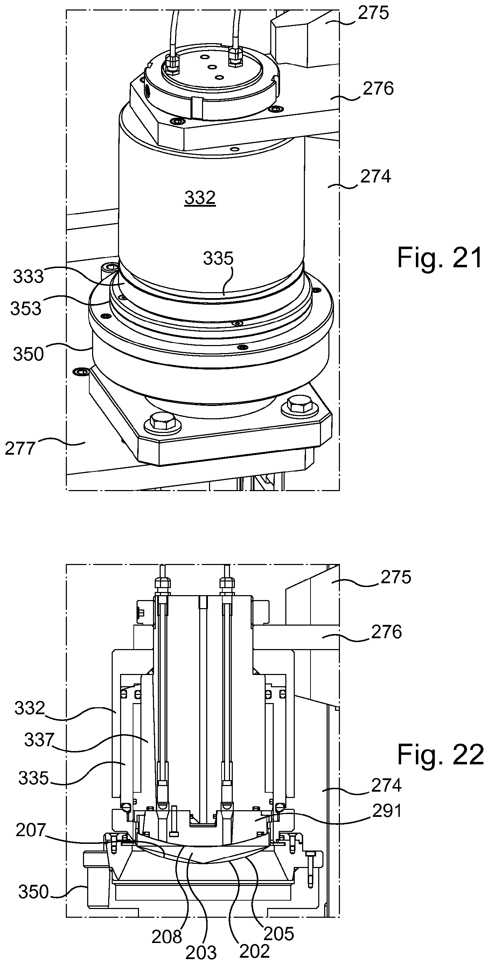

Sur les figures 21 et 22, la machine 200 est dans une configuration de lamination où le centre de la première face 204 du film 202 et le centre de la face courbe 207 du substrat 203 sont mis en contact.

Cette mise en contact permet d'appliquer le film fonctionnel 202 avec le substrat ophtalmique 203, en inversant la courbure du film fonctionnel 202, afin de diffuser radialement à partir du centre du film fonctionnel 202 jusqu'à sa périphérie (au niveau de son pourtour 206) un contact conformal entre le film fonctionnel 202 et la face courbe 207 du substrat 203.

Pour ce faire, l'unité de contrôle et de commande est configurée pour agir sur le système élévateur 270 pour déplacer sa partie mobile 274 et donc la première plaque support 276 sur le plateau mobile 275, vis-à-vis de sa partie fixe 273 et donc vis-à-vis de la second plaque support 277 ; de sorte à translater verticalement le dispositif 223, et donc le substrat 203, vers le bol 350 et donc vers le film 202.

Le déplacement de l'enveloppe 332 du dispositif 223 fait passer le piston mobile 335 de sa position déployée à une position intermédiaire ou semi-rétractée, avec la bague annulaire d'étanchéité 333 qui reste au contact du second joint 354 de la rondelle 353 du dispositif 224.

L'unité de contrôle et de commande est configurée pour déplacer la partie mobile 274 du système élévateur 270 de manière contrôlée, par exemple sous une vitesse constante prédéterminée de rapprochement du bol 350 et du dispositif 223 l'une par rapport à l'autre, notamment de l'ordre par exemple de 0,05 à 20 millimètres/seconde, préférentiellement de l'ordre de 0,3 à 0,5 millimètre/seconde.

L'application du film 202 avec le substrat 203 et l'inversion de courbure du film 202 engendre intrinsèquement une pression dans la première enceinte 234, laquelle pression est contrôlée et régulée par exemple 0,25 bar, de la même manière qu'indiquée plus haut ; et au surplus, en fin d'étape de lamination (après l'inversion de courbure du film), la pression peut être contrôlée et régulée de sorte à être comprise par exemple entre 0 et 5 bars, préférentiellement comprise entre 1,5 et 3,5 bars, pendant une durée par exemple comprise entre 30 secondes et 10 minutes.

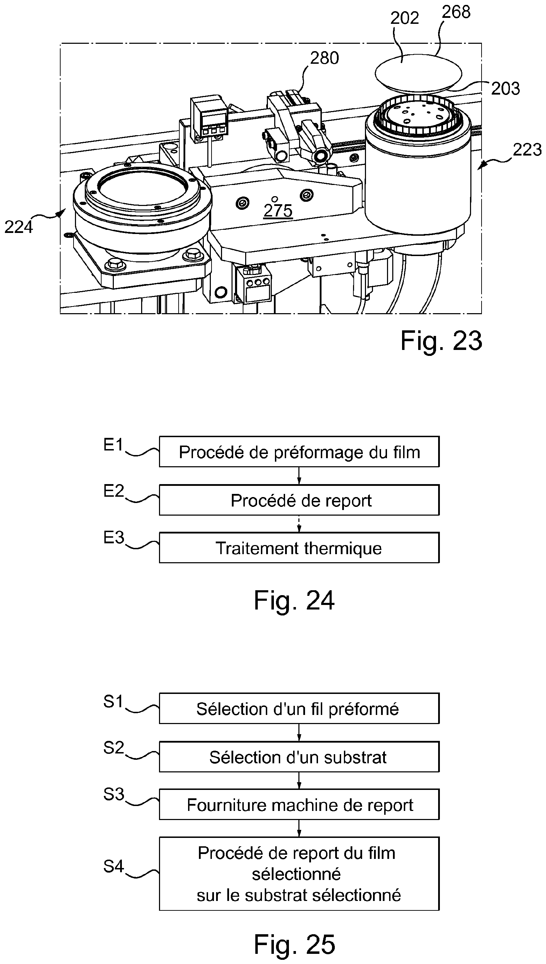

Sur la figure 23, la machine 200 est de nouveau dans sa configuration de repos et l'ensemble film fonctionnel préformé 202 et substrat 203 forme une lentille ophtalmique 268.

Pour ce faire, le doigt 283 de l'actionneur de verrouillage 280 a été retirée de l'orifice 279 dans le plateau mobile 275 et ce dernier a été actionné pour revenir avec l'ensemble laminé dans sa première position, où la première plaque support 276 vient au contact et en butée du second détecteur de position 286 et de l'organe de butée 289 ; et la lentille ophtalmique 268 ainsi formée a été retirée de la couronne 334 du dispositif 223.

Le report du film 2, 102 ou 202 décrit ci-avant est réalisé directement sur la face courbe 7, 107 ou 207 du substrat 3, 103 ou 203.

La face courbe peut présenter une couche initiale formée d'un matériau présentant des propriétés adhésives, sur laquelle est reporté le film.

Dans le cadre de l'invention, il faut comprendre que la face courbe du substrat est soit nue, soit adhésivée, soit elle peut déjà comporter un film initial ou un revêtement initial sur la face nue et/ou sur la face adhésivée, voire plusieurs.

Le film reporté peut donc être mis en contact avec la couche initiale adhésive et/ou avec un film/revêtement initial sur le substrat.

Un tel film/revêtement initial est disposé sur au moins une des faces du substrat et est configuré pour lui conférer au moins une fonction choisie par exemple parmi celles susmentionnées au sujet du film fonctionnel préformé qui est reporté.

Les figures 24 et 25 sont des schéma-blocs illustrant différentes étapes de procédés de fabrication de lentilles ophtalmiques 68, 168, 268, mettant chacun en œuvre notamment un procédé de report à l'aide d'une des machines 1, 100 et 200 décrites ci-dessus.

Sur la figure 24, le procédé de fabrication de lentilles ophtalmiques 68, 168, 268 comporte un procédé E1 de préformage d'un film fonctionnel 2, 102, 202, notamment par thermoformage, pour donner une courbure au film fonctionnel ; puis un procédé E2 de report du film fonctionnel préformé 2, 102, 202 sur le substrat ophtalmique 3, 103, 203 conformément à la description faite ci-avant, à l'aide de d'une des machines 1, 100, 200, et dont les étapes peuvent être mises en œuvre à température ambiante, pour obtenir la lentille ophtalmique ; puis un traitement thermique E3 de la lentille ophtalmique 68, 168, 268 obtenue à l'issue du procédé de report, par exemple un recuit.

On notera que les étapes du procédé de report correspondent aux différentes configurations des machines de report, à savoir les étapes de chargement, serrage, retournement, pré-lamination, lamination et de retrait du procédé de report correspondent respectivement aux configurations de repos, serrage, retournement, pré-lamination, lamination et encore repos des machines.

La machine de report selon l'invention est particulièrement intéressante lorsque la lentille ophtalmique ainsi formée doit subir, postérieurement au report, un traitement thermique. En effet, au cours d'un traitement thermique d'un tel assemblage formant une lentille, la température du substrat augmente et, lorsque sa température devient proche d'une température de transition vitreuse du matériau dans lequel est réalisé le substrat, ce dernier se ramollit jusqu'à ne plus ou presque plus opposer de résistance à toutes contraintes résiduelles présentes dans l'assemblage formé (film/substrat). La mollesse du substrat fait que les contraintes résiduelles présentes dans l'assemblage peuvent subir une relaxation et ainsi conduire à une légère déformation du substrat, par exemple un léger vrillage. Une telle déformation peut induire un léger défaut optique, voire un léger changement de la fonction optique de la lentille. Or, les machines décrites ci-dessus permettent de limiter la formation de telles contraintes, en particulier grâce aux positionnements et à l'alignement précis du film et du substrat et aussi grâce au déplacement contrôlé lors de l'application du film.

Sur la figure 25, le procédé de fabrication de lentilles ophtalmiques 68, 168, 268 comporte une étape S1 de sélection du film fonctionnel préformé 2, 102, 202 parmi une pluralité de films fonctionnels préformés, une étape S2 de sélection du substrat ophtalmique 3, 103, 203 parmi une pluralité de substrats et une étape S3 de fourniture de la machine de report 1, 100, 200 pour la mise en œuvre du procédé de report du film fonctionnel préformé sélectionné sur la face courbe du substrat sélectionné.

Dans des variantes non illustrées, l'application d'une différence positive de pression dans la première enceinte est seulement optionnelle et/ou elle peut être faite plus généralement avant ou pendant l'étape de lamination et/ou pré-lamination, et peut durer tout le temps ou seulement une partie du temps de lamination.

On rappelle plus généralement que l'invention ne se limite pas aux exemples décrits et représentés.

## Revendications

1. Machine de report de film fonctionnel préformé (2 ; 102 ; 202) sur une face courbe (7 ; 107 ; 207) d'un substrat ophtalmique (3 ; 103 ; 203), comportant :
- un premier dispositif de réception (23 ; 123 ; 223) configuré pour recevoir et maintenir ledit substrat dans une première position prédéterminée ;
- un deuxième dispositif de réception (24 ; 124 ; 224), distinct dudit premier dispositif de réception, et configuré pour recevoir ledit film fonctionnel préformé dans une deuxième position prédéterminée ; avec ledit premier dispositif de réception et/ou ledit deuxième dispositif de réception qui sont en outre configurés pour maintenir ledit film fonctionnel préformé dans sa deuxième position prédéterminée et pour appliquer une force de pression prédéterminée sur tout un pourtour dudit film fonctionnel ;
- un premier mécanisme de mise en mouvement (25 ; 125 ; 225) d'au moins un desdits premier et deuxième dispositifs de réception, configuré pour placer ladite face courbe dudit substrat ophtalmique en regard dudit film fonctionnel préformé, avec les centres géométriques respectifs du substrat ophtalmique et dudit film fonctionnel préformé qui sont alignés ;
ladite machine étant **caractérisée en ce qu'**elle comporte en outre :
- un deuxième mécanisme de mise en mouvement (26 ; 170 ; 270) d'au moins un desdits premier et deuxième dispositifs de réception, configuré pour mettre en contact le centre dudit film fonctionnel préformé avec le centre de ladite face courbe dudit substrat et ensuite pour appliquer ledit film fonctionnel avec ledit substrat ophtalmique afin de diffuser radialement à partir du centre dudit film fonctionnel jusqu'à sa périphérie un contact conformal entre ledit film fonctionnel et ladite face courbe dudit substrat ; et
- une unité de contrôle et de commande configurée pour contrôler au moins ledit deuxième mécanisme de mise en mouvement lorsque ledit film fonctionnel et ledit substrat ophtalmique sont en contact.

2. Machine selon la revendication 1, dans laquelle ledit deuxième dispositif de réception et ledit film fonctionnel préformé maintenu dans sa deuxième position prédéterminée délimitent une première enceinte fermée (34 ; 134 ; 234) et étanche, et ladite machine (1 ; 100 ; 200) comporte en outre un système configuré pour générer une différence positive de pression au sein de ladite première enceinte par rapport à son environnement immédiat, de sorte à mettre en tension ledit film fonctionnel préformé.

3. Machine selon l'une des revendications 1 et 2, dans laquelle ledit deuxième dispositif de réception présente une base horizontale (51 ; 193) sur laquelle repose le film fonctionnel par son pourtour (6 ; 106) et un mécanisme de serrage configuré pour appliquer verticalement et uniformément ladite force de pression prédéterminée sur ledit pourtour dudit film fonctionnel.

4. Machine selon l'une des revendication 1 et 2, dans laquelle lesdits premier et deuxième dispositifs de réception (223, 224) sont configurés pour maintenir dans sa deuxième position prédéterminée ledit film fonctionnel préformé et pour définir, lorsque ledit film fonctionnel préformé est en regard de ladite face courbe dudit substrat, une deuxième enceinte fermée et étanche (348) délimitée notamment par ladite face courbe dudit substrat et une face dudit film fonctionnel préformé qui est tournée vers ladite face courbe dudit substrat, et ladite machine comporte en outre un système configuré pour générer une différence négative de pression au sein de ladite deuxième enceinte par rapport à ladite première enceinte.

5. Machine selon l'une quelconque des revendications 1 à 4, dans laquelle lesdits premier et deuxième dispositifs de réception sont configurés pour que ladite face courbe dudit substrat et une face dudit film fonctionnel prévue pour être appliquée sur ladite face courbe dudit substrat soient tournées dans une même direction axiale lorsque ledit substrat et ledit film fonctionnel sont respectivement dans les première et deuxième positions prédéterminées, avant leur mise en regard, et ledit premier mécanisme de mise en mouvement (25 ; 125 ; 225) est configuré pour retourner au moins un desdits premier et deuxième dispositifs de réception pour le positionner en regard de l'autre desdits premier et deuxième dispositifs de réception et ainsi placer ladite face courbe dudit substrat ophtalmique en regard de ladite face dudit film fonctionnel préformé prévue pour être appliquée sur ladite face courbe dudit substrat.

6. Machine selon l'une quelconque des revendications 1 à 5, dans laquelle au moins un desdits premier et deuxième dispositifs de réception comporte un mécanisme de centrage automatique (32, 52 ; 132, 194 ; 334, 353) dudit substrat et/ou dudit film fonctionnel respectivement dans la première et/ou dans la deuxième position prédéterminée.

7. Procédé de fabrication d'une lentille ophtalmique comportant un substrat (3 ; 103 ; 203) et un film fonctionnel préformé (2 ; 102 ; 202) assujetti à une face courbe dudit substrat, ledit procédé de fabrication comportant un procédé de report dudit film fonctionnel préformé, mis en œuvre à l'aide d'une machine de report (1 ; 100 ; 200) selon l'une quelconque des revendications 1 à 6 ; ledit procédé de report comportant les étapes suivantes :
- monter et maintenir ledit substrat dans une première position prédéterminée sur un premier dispositif de réception (23 ; 123 ; 223) de ladite machine ;
- monter ledit film fonctionnel préformé dans une deuxième position prédéterminée sur un deuxième dispositif de réception (24 ; 124 ; 224) de ladite machine et le maintenir en appliquant une force de pression prédéterminée sur tout un pourtour dudit film fonctionnel grâce audit premier dispositif de réception et/ou audit deuxième dispositif de réception ;
- positionner la face courbe dudit substrat en regard dudit film fonctionnel préformé avec un premier mécanisme de mise en mouvement (25 ; 125 ; 225) d'au moins un desdits premier et deuxième dispositifs de réception de ladite machine, avec les centres géométriques respectifs du substrat et dudit film fonctionnel préformé qui sont alignés ;
ledit procédé étant **caractérisé en ce qu'**il comporte en outre les étapes suivantes :
- mettre en contact le centre dudit film fonctionnel préformé avec le centre de ladite face courbe dudit substrat ; et
- appliquer ledit film fonctionnel avec ledit substrat ophtalmique afin de diffuser radialement à partir du centre dudit film fonctionnel jusqu'à sa périphérie un contact conformal entre ledit film fonctionnel et ladite face courbe dudit substrat, avec un deuxième mécanisme de mise en mouvement (26 ; 170 ; 270) d'au moins un desdits premier et deuxième dispositifs de réception de ladite machine ; ladite mise en contact et ladite application étant contrôlée par une unité de contrôle et de commande de ladite machine.

8. Procédé de fabrication selon la revendication 7, dans lequel ledit deuxième dispositif de réception et ledit film fonctionnel préformé maintenu dans sa deuxième position prédéterminée délimitent une première enceinte fermée (34 ; 134 ; 234) et étanche, et ledit procédé de report comporte une étape de génération d'une différence positive de pression au sein de ladite première enceinte par rapport à son environnement immédiat de sorte à mettre en tension ledit film fonctionnel préformé.

9. Procédé de fabrication selon la revendication 8, dans lequel la différence positive de pression au sein de ladite première enceinte par rapport à son environnement immédiat est comprise entre 0,1 et 1 bar, préférentiellement comprise entre 0,1 et 0,5 bar, et encore préférentiellement égale à 0,25 bar.

10. Procédé de fabrication selon l'une quelconque des revendications 7 à 9, dans lequel ledit deuxième dispositif de réception présente une base horizontale (51 ; 193) sur laquelle repose ledit film fonctionnel par son pourtour (6 ; 106), et l'étape de maintenir ledit film fonctionnel dans sa deuxième position prédéterminée est réalisée en appliquant verticalement ladite force de pression prédéterminée sur ledit pourtour dudit film fonctionnel avec un mécanisme de serrage dudit deuxième dispositif de réception.

11. Procédé de fabrication selon l'une quelconque des revendications 7 à 9, dans lequel lesdits premier et deuxième dispositifs de réception sont configurés pour maintenir dans sa deuxième position prédéterminée ledit film fonctionnel préformé et pour définir, lorsque ledit film fonctionnel préformé est en regard de ladite face courbe dudit substrat, une deuxième enceinte fermée (348) et étanche délimitée notamment par ladite face courbe dudit substrat et une face dudit film fonctionnel préformé qui est tournée vers ladite face courbe dudit substrat, et ledit procédé de report comporte une étape de génération d'une différence négative de pression au sein de ladite deuxième enceinte par rapport à ladite première enceinte.

12. Procédé de fabrication selon la revendication 11, dans lequel la différence négative de pression au sein de ladite deuxième enceinte par rapport à ladite première enceinte est comprise entre 0,1 et 1 bar, préférentiellement comprise entre 0,1 et 0,5 bar, et encore préférentiellement égale à 0,25 bar.

13. Procédé de fabrication selon l'une quelconque des revendications 7 à 12, dans lequel l'étape d'appliquer ledit film sur ledit substrat est réalisée en inversant la courbure dudit film fonctionnel afin de diffuser radialement à partir du centre dudit film fonctionnel jusqu'à sa périphérie le contact conformal entre ledit film fonctionnel et ladite face courbe dudit substrat.

14. Procédé de fabrication selon l'une quelconque des revendications 7 à 13, dans lequel les étapes de monter ledit substrat et ledit film fonctionnel respectivement sur lesdits premier et deuxième dispositifs de réception sont réalisées de sorte que ladite face courbe dudit substrat et une face dudit film fonctionnel prévue pour être appliquée sur ladite face courbe dudit substrat soient tournées dans une même direction axiale, et l'étape de placer ladite face courbe dudit substrat ophtalmique en regard de ladite face dudit film fonctionnel préformé prévue pour être appliquée sur ladite face courbe dudit substrat est réalisée en retournant au moins un desdits premier et deuxième dispositifs de réception.

15. Procédé de fabrication selon l'une quelconque des revendications 7 à 14, comportant, après ladite étape d'appliquer ledit film fonctionnel (2 ; 102 ; 202) sur ledit substrat ophtalmique (3 ; 103 ; 203), une étape d'application dans ladite première enceinte (34 ; 134 ; 234) une pression comprise entre 0 et 5 bars, préférentiellement comprise entre 1,5 et 3,5 bars, pendant une durée comprise entre 30 secondes et 10 minutes.

## Patentansprüche

1. Maschine zum Übertragen eines vorgeformten funktionalen Films (2; 102; 202) auf eine gekrümmte Fläche (7; 107; 207) eines ophthalmischen Substrats (3; 103; 203), die Folgendes umfasst:
- eine erste Aufnahmevorrichtung (23; 123; 223), die konfiguriert ist, das Substrat in einer ersten vorgegebenen Position aufzunehmen und zu halten;
- eine zweite Aufnahmevorrichtung (24; 124; 224), die von der ersten Aufnahmevorrichtung verschieden ist und konfiguriert ist, den vorgeformten funktionalen Film in einer zweiten vorgegebenen Position aufzunehmen; wobei die erste Aufnahmevorrichtung und/oder die zweite Aufnahmevorrichtung außerdem konfiguriert sind, den vorgeformten funktionalen Film in seiner zweiten vorgegebenen Position zu halten und auf den gesamten Umfang des funktionalen Films eine vorgegebene Druckkraft auszuüben;
- einen ersten Mechanismus (25; 125; 225), um die erste und/oder die zweite Aufnahmevorrichtung in Bewegung zu versetzen, der konfiguriert ist, die gekrümmte Fläche des ophthalmischen Substrats gegenüber dem vorgeformten funktionalen Film so anzuordnen, dass die jeweiligen geometrischen Zentren des ophthalmischen Substrats und des vorgeformten funktionalen Films aufeinander ausgerichtet sind;
wobei die Maschine **dadurch gekennzeichnet ist, dass** sie außerdem Folgendes umfasst:
- einen zweiten Mechanismus (26; 170; 270), um die erste und/oder die zweite Aufnahmevorrichtung in Bewegung zu versetzen, der konfiguriert ist, das Zentrum des vorgeformten funktionalen Films mit dem Zentrum der gekrümmten Fläche des Substrats in Kontakt zu bringen und anschließend den funktionalen Film gegen das ophthalmische Substrat zu drücken, um einen gleichmäßigen Kontakt zwischen dem funktionalen Film und der gekrümmten Fläche des Substrats ausgehend vom Zentrum des funktionalen Films bis zu seinem äußeren Umfang radial zu verbreiten; und
- eine Steuer- und Befehlseinheit, die konfiguriert ist, wenigstens den zweiten Bewegungsversetzungsmechanismus zu steuern, wenn der funktionale Film und das ophthalmische Substrat in Kontakt sind.

2. Maschine nach Anspruch 1, wobei die zweite Aufnahmevorrichtung und der vorgeformte funktionale Film, der in seiner zweiten vorgegebenen Position gehalten wird, eine erste geschlossene und dichte Umschließung (34; 134; 234) begrenzen, wobei die Maschine (1; 100; 200) außerdem ein System enthält, das konfiguriert ist, in der ersten Umschließung eine positive Druckdifferenz in Bezug auf ihre unmittelbare Umgebung zu erzeugen, derart, dass der vorgeformte funktionale Film in Spannung versetzt wird.

3. Maschine nach einem der Ansprüche 1 und 2, wobei die zweite Aufnahmevorrichtung eine horizontale Basis (51; 193), auf der der funktionale Film mit seinem Umriss (6; 106) ruht, und einen Klemmmechanismus, der konfiguriert ist, die vorgegebene Druckkraft vertikal und gleichmäßig auf den Umriss des funktionalen Films auszuüben, aufweist.

4. Maschine nach einem der Ansprüche 1 und 2, wobei die erste und die zweite Aufnahmevorrichtung (223, 224) konfiguriert sind, den vorgeformten funktionalen Film in seiner zweiten vorgegebenen Position zu halten und dann, wenn sich der vorgegebene funktionale Film gegenüber der gekrümmten Fläche des Substrats befindet, eine zweite geschlossene und dichte Umschließung (348) zu definieren, die insbesondere durch die gekrümmte Fläche des Substrats und eine Fläche des vorgeformten funktionalen Films, die zu der gekrümmten Fläche des Substrats gewendet ist, begrenzt ist, wobei die Maschine außerdem ein System umfasst, das konfiguriert ist, in der zweiten Umschließung eine negative Druckdifferenz in Bezug auf die erste Umschließung zu erzeugen.

5. Maschine nach einem der Ansprüche 1 bis 4, wobei die erste und die zweite Aufnahmevorrichtung so konfiguriert sind, dass die gekrümmte Fläche des Substrats und eine Fläche des funktionalen Films, die dazu vorgesehen ist, gegen die gekrümmte Fläche des Substrats gedrückt zu werden, in dieselbe axiale Richtung gewendet sind, wenn das Substrat und der funktionale Film sich in der ersten bzw. der zweiten vorgegebenen Position befinden, bevor sie einander gegenüber angeordnet werden, und wobei der erste Bewegungsversetzungsmechanismus (25; 125; 225) konfiguriert ist, die erste und die zweite Aufnahmevorrichtung umzudrehen, um sie gegenüber der jeweils anderen der ersten und der zweiten Aufnahmevorrichtung zu positionieren und somit die gekrümmte Fläche des ophthalmischen Substrats gegenüber der Fläche des vorgeformten funktionalen Films, die dazu vorgesehen ist, gegen die gekrümmte Fläche des Substrats gedrückt zu werden, anzuordnen.

6. Maschine nach einem der Ansprüche 1 bis 5, wobei die erste und/oder die zweite Aufnahmevorrichtung einen Mechanismus (32, 52; 132, 194; 334, 353) für die automatische Zentrierung des Substrats und/oder des funktionalen Films jeweils in der ersten und/oder der zweiten vorgegebenen Position umfassen.

7. Verfahren für die Herstellung einer ophthalmischen Linse, die ein Substrat (3; 103; 203) und einen vorgeformten funktionalen Film (2; 102; 202), der gegen eine gekrümmte Fläche des Substrats gedrückt ist, umfasst, wobei das Herstellungsverfahren ein Verfahren zum Übertragen des vorgeformten funktionalen Films umfasst, das mit Hilfe einer Übertragungsmaschine (1; 100; 200) nach einem der Ansprüche 1 bis 6 ausgeführt wird; wobei das Übertragungsverfahren die folgenden Schritte umfasst:
- Anbringen und Halten des Substrats in einer ersten vorgegebenen Position an einer ersten Aufnahmevorrichtung (23; 123; 223) der Maschine;
- Anbringen des vorgeformten funktionalen Films in einer zweiten vorgegebenen Position an einer zweiten Aufnahmevorrichtung (24; 124; 224) der Maschine und Halten des vorgeformten funktionalen Films durch Ausüben einer vorgegebenen Druckkraft auf seinen gesamten Umfang mittels der ersten Aufnahmevorrichtung und/oder der zweiten Aufnahmevorrichtung;
- Positionieren der gekrümmten Fläche des Substrats gegenüber dem vorgeformten funktionalen Film mit einem ersten Mechanismus (25; 125; 225), um die erste und/oder die zweite Aufnahmevorrichtung der Maschine in Bewegung zu versetzen, derart, dass die jeweiligen geometrischen Zentren des Substrats bzw. des vorgeformten funktionalen Films aufeinander ausgerichtet sind;
wobei das Verfahren **dadurch gekennzeichnet ist, dass** es außerdem die folgenden Schritte umfasst:
- Herstellen eines Kontakts zwischen dem Zentrum des vorgeformten funktionalen Films und dem Zentrum der gekrümmten Fläche des Substrats; und
- Drücken des funktionalen Films gegen das ophthalmische Substrat, um einen gleichmäßigen Kontakt zwischen dem funktionalen Film und der gekrümmten Fläche des Substrats ausgehend vom Zentrum des funktionalen Films bis zu seinem Umfang mit einem zweiten Mechanismus (26; 170; 270), um die erste und/oder die zweite Aufnahmevorrichtung der Maschine in Bewegung zu versetzen, zu verbreiten; wobei die Herstellung des Kontakts und das Ausüben des Drucks durch eine Steuer- und Befehlseinheit der Maschine gesteuert werden.

8. Herstellungsverfahren nach Anspruch 7, wobei die zweite Aufnahmevorrichtung und der vorgeformte funktionale Film, der in seiner zweiten vorgegebenen Position gehalten wird, eine erste geschlossene und dichte Umschließung (34; 134; 234) begrenzen, wobei das Übertragungsverfahren einen Schritt des Erzeugens einer positiven Druckdifferenz in der ersten Umschließung in Bezug auf ihre unmittelbare Umgebung, derart, dass der vorgeformte funktionale Film in Spannung versetzt wird, umfasst.

9. Herstellungsverfahren nach Anspruch 8, wobei die positive Druckdifferenz in der ersten Umschließung in Bezug auf ihre unmittelbare Umgebung im Bereich von 0,1 bis 1 Bar, vorzugsweise im Bereich von 0,1 bis 0,5 Bar liegt und noch stärker bevorzugt gleich 0,25 Bar ist.

10. Herstellungsverfahren nach einem der Ansprüche 7 bis 9, wobei die zweite Aufnahmevorrichtung eine horizontale Basis (51; 193) aufweist, auf der der funktionale Film mit seinem Umriss (6; 106) ruht, und wobei der Schritt des Haltens des funktionalen Films in seiner zweiten vorgegebenen Position durch vertikales Ausüben der vorgegebenen Druckkraft auf den Umriss des funktionalen Films mit einem Klemmmechanismus der zweiten Aufnahmevorrichtung ausgeführt wird.

11. Herstellungsverfahren nach einem der Ansprüche 7 bis 9, wobei die erste und die zweite Aufnahmevorrichtung konfiguriert sind, den vorgeformten funktionalen Film in seiner zweiten vorgegebenen Position zu halten und dann, wenn der vorgeformte funktionale Film sich gegenüber der gekrümmten Fläche des Substrats befindet, eine zweite geschlossene und dichte Umschließung (348) zu definieren, die insbesondere durch die gekrümmte Fläche des Substrats und eine Fläche des vorgeformten funktionalen Films, die zu der gekrümmten Fläche des Substrats gewendet ist, begrenzt wird, wobei das Übertragungsverfahren einen Schritt des Erzeugens einer negativen Druckdifferenz in der zweiten Umschließung in Bezug auf die erste Umschließung umfasst.

12. Herstellungsverfahren nach Anspruch 11, wobei die negative Druckdifferenz in der zweiten Umschließung in Bezug auf die erste Umschließung im Bereich von 0,1 bis 1 Bar, vorzugsweise im Bereich von 0,1 bis 0,5 Bar liegt und stärker bevorzugt gleich 0,25 Bar ist.

13. Herstellungsverfahren einem der Ansprüche 7 bis 12, wobei der Schritt des Drückens des Films gegen das Substrat durch Umkehren der Krümmung des funktionalen Films ausgeführt wird, um den gleichmäßigen Kontakt zwischen dem funktionalen Film und der gekrümmten Fläche des Substrats ausgehend vom Zentrum des funktionalen Films bis zu seinem Umfang radial zu verbreiten.

14. Herstellungsverfahren nach einem der Ansprüche 7 bis 13, wobei die Schritte des Anbringens des Substrats und des funktionalen Films an der ersten bzw. der zweiten Aufnahmevorrichtung in der Weise ausgeführt werden, dass die gekrümmte Fläche des Substrats und eine Fläche des funktionalen Films, die vorgesehen ist, um gegen die gekrümmte Fläche des Substrats gedrückt zu werden, in dieselbe axiale Richtung gewendet werden, und wobei der Schritt des Anordnens der gekrümmten Fläche des ophthalmischen Substrats gegenüber der Fläche des vorgeformten funktionalen Films, die dazu vorgesehen ist, gegen die gekrümmte Fläche des Substrats gedrückt zu werden, durch Umdrehen der ersten und/oder der zweiten Aufnahmevorrichtung ausgeführt wird.

15. Herstellungsverfahren nach einem der Ansprüche 7 bis 14, das nach dem Schritt des Drückens des funktionalen Films (2; 102; 202) gegen das ophthalmische Substrat (3; 103; 203) einen Schritt des Erzeugens in der ersten Umschließung (34; 134; 234) eines Drucks im Bereich von 0 bis 5 Bar, vorzugsweise im Bereich von 1,5 bis 3,5 Bar, während einer Dauer im Bereich von 30 Sekunden bis 10 Minuten umfasst.

## Claims

1. Machine for transferring a preformed functional film (2; 102; 202) onto a curved face (7; 107; 207) of an ophthalmic substrate (3; 103; 203), comprising:
- a first receiving device (23; 123; 223) configured to receive and hold said substrate in a first predetermined position;
- a second receiving device (24; 124; 224), distinct from said first receiving device and configured to receive said preformed functional film in a second predetermined position; with said first receiving device and/or said second receiving device also being configured to hold said preformed functional film in its second predetermined position and to apply a predetermined pressure force to the entire perimeter of said functional film;
- a first movement mechanism (25; 125; 225) for moving at least one of said first and second receiving devices, configured to place said curved face of said ophthalmic substrate facing said preformed functional film, with the respective geometric centers of the ophthalmic substrate and of said preformed functional film aligned;
said machine being **characterized in that** it further comprises:
- a second movement mechanism (26; 170; 270) for moving at least one of said first and second receiving devices, configured to bring the center of said preformed functional film into contact with the center of said curved face of said substrate and then apply said functional film to said ophthalmic substrate in such a way as to spread, radially from the center of said functional film to the periphery thereof, a conformal contact between said functional film and said curved face of said substrate; and
- a command and control unit configured to control at least said second movement mechanism when said functional film and said ophthalmic substrate are in contact.

2. Machine according to Claim 1, wherein said second receiving device and said preformed functional film held in its second predetermined position delimit a first closed and sealed chamber (34; 134; 234), and said machine (1; 100; 200) further comprises a system configured to generate a positive pressure difference within said first chamber in relation to its immediate surroundings, so as to place said preformed functional film under tension.

3. Machine according to one of Claims 1 and 2, wherein said second receiving device has a horizontal base (51; 193) on which the functional film rests along its perimeter (6; 106) and a clamping mechanism configured to apply said predetermined pressure force vertically and uniformly to said perimeter of said functional film.

4. Machine according to one of Claims 1 and 2, wherein said first and second receiving devices (223, 224) are configured to hold said preformed functional film in its second predetermined position and to define, when said preformed functional film is facing said curved face of said substrate, a second closed and sealed chamber (348) delimited notably by said curved face of said substrate and one face of said preformed functional film which face faces toward said curved face of said substrate, and said machine further comprises a system configured to generate a negative pressure difference within said second chamber in relation to said first chamber.

5. Machine according to any one of Claims 1 to 4, wherein said first and second receiving devices are configured so that said curved face of said substrate and one face of said functional film intended to be applied to said curved face of said substrate face in the same axial direction when said substrate and said functional film are respectively in the first and second predetermined positions, before they are brought to face one another, and said first movement mechanism (25; 125; 225) is configured to turn at least one of said first and second receiving devices over so as to position it facing the other of said first and second receiving devices and thus place said curved face of said ophthalmic substrate so that it faces said face of said preformed functional film that is intended to be applied to said curved face of said substrate.

6. Machine according to any one of Claims 1 to 5, wherein at least one of said first and second receiving devices comprises a centering mechanism (32, 52; 132, 194; 334, 353) for automatically centering said substrate and/or said functional film in the first and/or the second predetermined position respectively.

7. Method for manufacturing an ophthalmic lens comprising a substrate (3; 103; 203) and a functional film (2; 102; 202) which is preformed and bonded to a curved face of said substrate, said method of manufacture comprising a method for transferring said preformed functional film which is carried out using a transfer machine (1; 100; 200) according to any one of Claims 1 to 6, said transfer method comprising the following steps:
- mounting and holding said substrate in a first predetermined position on a first receiving device (23; 123; 223) of said machine;
- mounting said preformed functional film in a second predetermined position on a second receiving device (24; 124; 224) of said machine and holding it while applying a predetermined pressure force to the entire perimeter of said functional film thanks to said first receiving device and/or to said second receiving device;
- positioning the curved face of said substrate to face said preformed functional film with a first movement mechanism (25; 125; 225) that moves at least one of said first and second receiving devices of said machine, with the respective geometric centers of the substrate and of said preformed functional film aligned; said method being **characterized in that** it further comprises the following steps:
- bringing the center of said preformed functional film into contact with the center of said curved face of said substrate; and
- applying said functional film to said ophthalmic substrate in such a way as to spread, radially from the center of said functional film as far as the periphery thereof, conformal contact between said functional film and said curved face of said substrate, using a second movement mechanism (26; 170; 270) of at least one of said first and second receiving devices of said machine; said bringing-into-contact and said application being controlled by a command and control unit of said machine.

8. Method of manufacture according to Claim 7, wherein said second receiving device and said preformed functional film held in its second predetermined position delimit a first closed and sealed chamber (34; 134; 234), and said transfer method comprises a step of generating a positive pressure difference within said first chamber in relation to its immediate surroundings, so as to place said preformed functional film under tension.

9. Method of manufacture according to Claim 8, wherein the positive pressure difference within said first chamber in relation to its immediate surroundings is comprised between 0.1 and 1 bar, preferably comprised between 0.1 and 0.5 bar, and more preferably still, equal to around 0.25 bar.

10. Method of manufacture according to any one of Claims 7 to 9, wherein said second receiving device has a horizontal base (51; 193) on which said functional film rests along its perimeter (6; 106) and the step of holding said functional film in its second predetermined position is performed by applying said predetermined pressure force vertically to said perimeter of said functional film with a mechanism for clamping said second receiving device.

11. Method of manufacture according to any one of Claims 7 to 9, wherein said first and second receiving devices are configured to hold said preformed functional film in its second predetermined position and to define, when said preformed functional film is facing said curved face of said substrate, a second closed and sealed chamber (348), delimited notably by said curved face of said substrate and one face of said preformed functional film which face faces toward said curved face of said substrate, and said transfer method comprises a step of generating a negative pressure difference within said second chamber in relation to said first chamber.

12. Method of manufacture according to Claim 11, wherein the negative pressure difference within said second chamber in relation to said first chamber is comprised between 0.1 and 1 bar, preferably comprised between 0.1 and 0.5 bar, and more preferably still, equal to around 0.25 bar.

13. Method of manufacture according to any one of Claims 7 to 12, wherein the step of applying said film to said substrate is performed by reversing the curvature of said functional film so as to spread, radially from the center of said functional film as far as the periphery thereof, the conformal contact between said functional film and said curved face of said substrate.

14. Method of manufacture according to any one of Claims 7 to 13, wherein the steps of mounting said substrate and said functional film respectively on said first and second receiving devices are performed in such a way that said curved face of said substrate and one face of said functional film intended to be applied to said curved face of said substrate face in the same axial direction, and the step of placing said curved face of said ophthalmic substrate so that it faces said face of said preformed functional film that is intended to be applied to said curved face of said substrate is performed by inverting at least one of said first and second receiving devices.

15. Method of manufacture according to any one of Claims 7 to 14, comprising, after said step of applying said functional film (2; 102; 202) to said ophthalmic substrate (3; 103; 203), a step of applying, within said first chamber (34; 134; 234), a pressure comprised between 0 and 5 bar, preferably comprised between 1.5 and 3.5 bar, for a duration comprised between 30 seconds and 10 minutes.
